# EUROPEAN PATENT APPLICATION

(11) **EP 2 357 392 A1**
(43) Date of publication of application: **17.08.2011**
(21) Application number: 09833256.2
(22) Date of filing: 11.08.2009
(51) Int. Cl.: F21S 2/00, F21V 19/00, G02F 1/1333, G02F 1/13357, F21Y 103/00

(54) **ILLUMINATION DEVICE, DISPLAY DEVICE, AND TELEVISION RECEPTION DEVICE**

(30) Priority: 18.12.2008 JP 2008322793
(71) Applicant: Sharp Kabushiki Kaisha, Osaka-shi, Osaka 545-8522 (JP)
(72) Inventor: The designation of the inventor has not yet been filed
(74) Representative: Müller-Boré & Partner Patentanwälte
(86) International application number: PCT/JP2009/064151
(87) International publication number: WO 2010/070950

(57) **Abstract**

A backlight unit 12 includes a chassis 14, a cold cathode tube 17, and a lamp clip 18. The chassis 14 has mounting holes 32 and 33. The cold cathode tube 17 is arranged inside the chassis 14. The lamp clip 18 is mounted to the chassis 14 through the mounting holes 32 and 33. The lamp clip 18 holds the cold cathode tube 17. The lamp clip 18 includes main body 27 and mounting parts 30 and 31. The main body 27 is arranged inside the chassis 14. Each mounting part 30/31 includes a base portion 30a/31a and a holding portion 30b/31b. The base portion 30a/31a projects from the main body 27 to the outside of the chassis 14 through the mounting hole 32/33. The holding portion 30b/31b projects from the base portion 30a/31a and extends along the main body 27. An edge of each mounting hole 32/33 is sandwiched between the main body 27 and the holding portion 30b/31b. The chassis 14 includes contact portions 43 and receiving portions 39 and 40 for receiving the mounting parts 30 and 31, respectively. Each receiving portion 39/40 is formed by drawing a part of the chassis 14 outward. The part is located close to the edge of the mounting hole 32/33 on opposite side to the edge sandwiched between the main body 27 and the holding portion 30b/31b. Each contact portion 43 is formed by projecting a part of the receiving portion 39/40 and in contact with the mounting portion 30/31.

## Description

### TECHNICAL FIELD

The present invention relates to a lighting device, a display device and a television receiver.

### BACKGROUND ART

A liquid crystal panel used in a liquid crystal display device such as a liquid crystal television receiver requires a backlight unit as a separate lighting device because the liquid crystal panel is not a light-emitting component. The backlight unit is arranged behind the liquid crystal panel (i.e., on an opposite side from a display surface). The backlight unit includes a chassis, a reflection sheet, a plurality of cold cathode tubes, multiple layers of optical members (e.g., diffusers), and lamp clips. The chassis is made of metal or resin and has an opening on the liquid crystal panel side. The reflection sheet is placed inside the chassis. The cold cathode tubes are housed in the chassis. The optical members are configured to effectively direct light from the cold cathode tubes toward the liquid crystal panel and arranged so as to cover the opening of the chassis. The lamp clips hold the middle portions of the cold cathode tubes that have elongated tubular shapes.

An example of lamp clips used in the backlight unit having the above configuration is disclosed in Patent Document 1. Each lamp clip includes a main body and a mounting part. The main body is arranged inside the chassis. The mounting part has a base portion and holding portion. The base portion projects from the main body toward the rear. The holding portion in a cantilever form projects from the end of the base portion and extends along the main body. The chassis has mounting holes larger than the mounting part in plan view. To mount the lamp clip to the chassis, the mounting part is inserted in the mounting hole and then the lamp clip is slid in a direction in which the holding portion extends. As a result, an edge of the mounting hole is sandwiched between the holding portion and the main body and thus the lamp clip is held in a condition that it is mounted.
Patent Document 1: Japanese Published Patent Application No. 2007-73527

### Problem to be Solved by the Invention

Each lamp clip has white surfaces to achieve high light reflectivity and effectively use light inside the chassis. However, the lamp clip cannot reflect all rays of light. Some rays of light pass through the lamp clip. The rays that pass the lamp clip leak from the chassis to the rear of the chassis through the mounting hole. As a result, display quality may decrease.

Because the slid-mounting type lamp clip described above includes the mounting part having the cantilever holding portion, the mounting part tends to be large with a large horizontal dimension in plan view. Therefore, an opening area of the chassis corresponding to the mounting hole in which the mounting part is inserted is also large. As a result, an amount of leak light tends to be large and a solution for such a problem is needed.

### DISCLOSURE OF THE PRESENT INVENTION

The present invention was made in view of the foregoing circumstances. An object of the present invention is to reduce leak light.

### Problem to be Solved by the Invention

A lighting device of the present invention includes a chassis, a lamp and a lamp holder. The chassis has a mounting hole. The lamp is arranged inside the chassis. The lamp holder is mounted to the chassis through the mounting hole and holds the lamp. The lamp holder includes a main body and a mounting part. The main body is arranged inside the chassis. The mounting part includes a base portion and a holding portion. The base portion projects from the main body and extends out of the chassis through the mounting hole. The holding portion projects from the base portion and extends along the main body such that an edge of the mounting hole is sandwiched between the main body and the holding portion. The chassis includes a receiving portion and a contact portion The receiving portion for receiving the mounting part is formed by drawing a part of the chassis outward. The part is adjacent to an edge of the mounting hole opposite to the edge sandwiched between the main body and the holding portion. The contact portion is formed by projecting a part of the receiving portion inward and configured to be in contact with the mounting part.

During mounting the lamp holder to the chassis, the mounting part is inserted in the receiving portion, and then the lamp holder is moved in a direction in which the holding portion extends from the base portion. The base portion and the holding portion are projected out of the chassis. The edge of the mounting hole is sandwiched between the holding portion and the main body. As a result, the lamp holder is mounted to the chassis. The receiving portion that receives the mounting part is formed by drawing a part of the chassis outward. In comparison to a receiving portion that is a cutout continuing into the mounting part, an opening area in the chassis can be reduced. Therefore, light that leaks to the outside of the chassis can be reduced.

When the mounting part is inserted in the receiving portion, the contact portion that is formed by projecting a part of the receiving portion inward is in contact with the mounting part. When the lamp holder is moved from that position along the extending direction in which the holding portion extends, the contact part rubs against the mounting part. Therefore, the movement of the lamp holder is smoothly guided.

Preferred embodiments of the present invention may have the following configurations.
(1) The contact portion includes a plurality of contact portions arranged in a direction along the main body and parallel to each other. During the movement of the lamp holder, the mounting part rubs against the contact portions for a sufficient period of time and thus high guide performance can be achieved.

(2) The contact portions are arranged such that a distance between the adjacent contact portions is smaller than a dimension of the mounting part measuring in a direction along the main body. At least two contact portions are in contact with the mounting part at the same time. Therefore, the lamp holder is less likely to tilt while it is moved. Therefore, high guide performance can be achieved.

(3) The receiving portion includes opposed walls opposed to each other. The contact portion is provided on each of the opposed walls. The contact portion is in contact with either side of the mounting part. Therefore, high guide performance can be achieved.

(4) The contact portion is opposite another contact portion. The mounting part is sandwiched between the contact portions that are opposite to each other. Therefore, high guide performance can be achieved.

(5) The contact portion and the mounting part are formed such that contact surfaces thereof are parallel to each other. The contact portion is in surface contact with the mounting part. Therefore, high guide performance can be achieved.

(6) The contact portion and the mounting part are formed such that the contact surfaces are substantially straight along a projecting direction in which the base portion projects. When the mounting part is inserted in the receiving portion, the mounting part is opposite the contact portion. Therefore, the contact part is in surface contact with the mounting part regardless of a depth of insertion of the mounting part.

(7) The contact portion is formed so as to extend through an entire dimension of the receiving portion along a projecting direction in which the base portion projects. When the mounting part is inserted in the receiving portion, the contact portion is properly in contact with the mounting part. Therefore, the guide function is properly performed.

(8) The receiving portion is formed in a tapered overall shape tapering toward a distal end. The receiving portion includes sidewalls and a bottom wall. The sidewalls rise outward from the chassis and tilt relative to the chassis. The bottom wall continues from distal ends of the sidewalls. The contact portion is provided on at least one of the sidewalls. Even when a clearance is created between the tilted sidewall and the mounting part, the contact portion that is formed by projecting a part of the sidewall inward is in contact with the mounting part. Therefore, the movement of the lamp holder is preferably guided. Furthermore, the mounting part is easily inserted in the receiving portion that is formed in a tapered shape with the tilted sidewalls. Namely, high workability can be provided.

(9) The chassis has a slit continuing into the mounting hole in an area adjacent to the sidewalls and the mounting hole. Therefore, the tilted sidewalls are easily formed in preferable shapes.

(10) The slit is wider than a dimension defined by bases of the sidewalls. During raising the sidewalls outward at angles, stress is less likely to be applied to the bases of the sidewalls. This reduces defects such as a crack in the chassis.

(11) The mounting part includes a pair of mounting parts away from each other in an extending direction in which the holding portion extends. The mounting hole includes a pair of mounting holes and the receiving portion includes a pair of receiving portions, the mounting holes and the receiving portions provided in locations corresponding to the respective mounting parts. The contact portion is provided in each receiving portion. The contact portion in each of the receiving portions away from each other in the extending direction in which the holding portion extends is in contact with the corresponding one of the mounting parts. Therefore, high guide performance can be achieved. Furthermore, the lamp holder is held to the chassis at two points away from each other in the extending direction in which the holding portion extends. Therefore, the mounting condition can be further stabilized and the leakage of light is controlled with the receiving portion.

(12) The mounting part includes a guide at a distal end of the holding portion. The guide is formed such that a distance to the main body gradually increases as a distance to the distal end decreases. With this configuration, the edge of the mounting hole can smoothly enter a space between the holding portion and the main body. The lamp holder can be more smoothly moved during mounting with the guide and the contact part.

(13) The main body and the chassis further include positioning structures that define a relative position of the main body to the chassis with respect to a direction along the main body. With this configuration, the lamp holder is maintained in a condition that it is positioned relative to the chassis along the main body.

(14) The positioning structures include a positioning protrusion provided on the main body and any one of a positioning recess and a positioning hole formed in the chassis and in which the positioning protrusion is fitted. By fitting the positioning protrusion on the main body in the positioning recess or the positioning hole in the chassis, the lamp holder is positioned relative to the chassis.

(15) The positioning structures are in a non-engaging state in a condition that the mounting part is in the receiving portion and in an engaging state in a condition that the mounting part is in the mounting hole. When the mounting part is in the mounting hole and the edge of the mounting hole is sandwiched between the holding portion and the main body, the positioning structures are engaged. With this configuration, the lamp holder mounted to the chassis is stably held.

(16) The main body has a wide portion that is wider than the receiving portion in an overlapping area that overlaps the receiving portion in plan view. With the wide portion, the main body is less likely to fall in the receiving portion. Therefore, the mounting condition of the lamp holder is further stabilized. In comparison to a main body, an entire part of which is wide, a material cost of the main body can be reduced.

Next, to solve the problem mentioned earlier, a display device of the present invention includes the above lighting device and a display panel configured to provide display using light from the lighting device.

According to such a display device, the lighting device that illuminates the display panels is less likely to produce leak light. Namely, the light is used more efficiently and thus high quality display can be provided.

An example of the display panel is a liquid crystal panel. Such a display device can be used as a liquid crystal display device in various applications including television receivers and personal computer displays. Such a display device is especially preferable in large-screen applications.

### Effect of the Invention

According to the present invention, the leak light can be reduced.

### BRIEF DESCRIPTION OF THE DRAWINGS

[FIG. 1] is an exploded perspective view illustrating a general construction of a television receiver according to the first embodiment of the present invention;
[FIG. 2] is an exploded perspective view illustrating a general construction of a liquid crystal display device;
[FIG. 3] is a cross-sectional view of the liquid crystal display device along a short-side direction;
[FIG. 4] is a cross-sectional view of a liquid crystal display device along the long-side direction;
[FIG. 5] is a cross-sectional view illustrating a lamp clip in a mounting position and a chassis;
[FIG. 6] is a plan view illustrating the lamp clip mounted to the chassis;
[FIG. 7] is a cross-sectional view along line vii-vii in FIG. 5;
[FIG. 8] is a plan view of the lamp clip;
[FIG. 9] is a bottom view of the lamp clip;
[FIG. 10] is a plan view illustrating mounting holes and receiving portions of the chassis;
[FIG. 11] is a cross-sectional view along line xi-xi in FIG. 10;
[FIG. 12] is a cross-sectional view along line xii-xii in FIG. 10;
[FIG. 13] is a cross-sectional view illustrating the lamp clip in a removed position and the chassis;
[FIG. 14] is a cross-sectional view illustrating the lamp clip in a hold position and the chassis;
[FIG. 15] is a cross-sectional view along line xv-xv in FIG. 14;
[FIG. 16] is a cross-sectional view along line xvi-xvi in FIG. 15;
[FIG. 17] is a cross-sectional view along line xvii-xvii in FIG. 15;
[FIG. 18] is a cross-sectional view illustrating a lamp clip in a mounting position and a chassis according to the second embodiment of the present invention;
[FIG. 19] is a cross-sectional view illustrating the lamp clip in a removed position and the chassis; and
[FIG. 20] is a cross-sectional view illustrating the lamp clip in a hold position and the chassis.

### Explanation of Symbols

- 10:: Liquid crystal display device (Display device)
- 11:: Liquid crystal panel (Display panel)
- 12:: Backlight unit (Lighting device)
- 14:: Chassis
- 17:: Cold cathode tube (Lamp)
- 18:: Lamp clip (Lamp holder)
- 27:: Main body
- 30:: First mounting part (Mounting part)
- 30a:: Base portion
- 30b:: Holding portion
- 30c:: Side surface (Contact surface)
- 31:: Second mounting part (Mounting part)
- 31a:: Base portion
- 31b:: Holding portion
- 31c:: Side surface (Contact surface)
- 32:: First mounting hole
- 33:: Second mounting hole
- 36:: Guide
- 39:: First receiving portion (Receiving portion)
- 39a:: Sidewall
- 39aa:: Long sidewall (Opposed wall)
- 39b:: Bottom wall
- 40:: Second receiving portion (Receiving portion)
- 40a:: Sidewall
- 40aa:: Long sidewall (Opposed wall)
- 40b:: Bottom wall
- 41:: Slit
- 42:: Wide portion
- 43:: Contact portion
- 43a:: Inner surface (Contact surface)
- 44:: Positioning protrusion (Positioning structure)
- 45:: Positioning hole (Positioning structure)
- TV:: Television receiver

### BEST MODE FOR CARRYING OUT THE INVENTION

### <First embodiment>

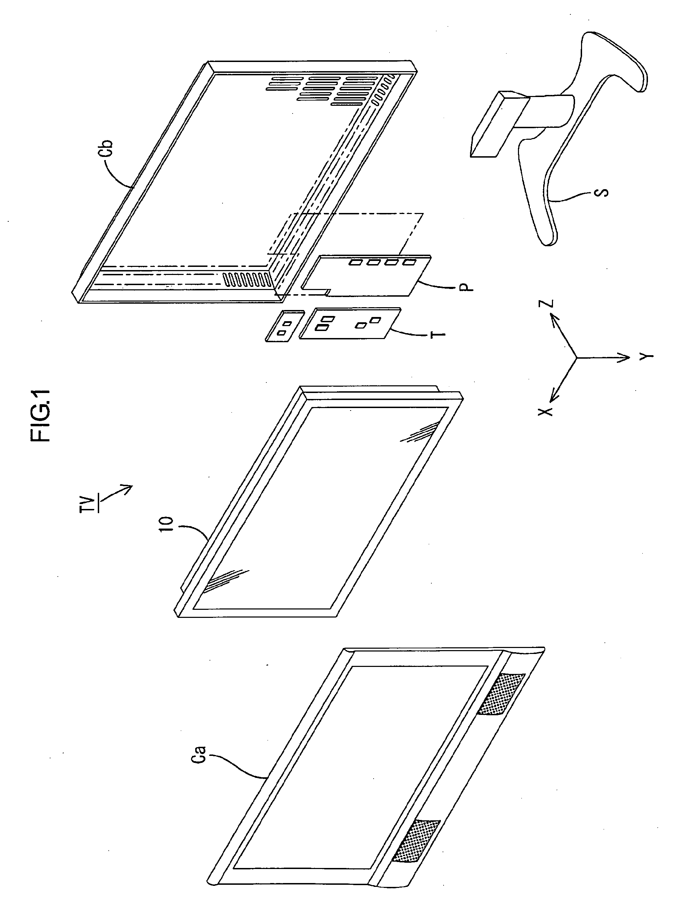

The first embodiment of the present invention will be explained with reference to FIGS. 1 to 17.

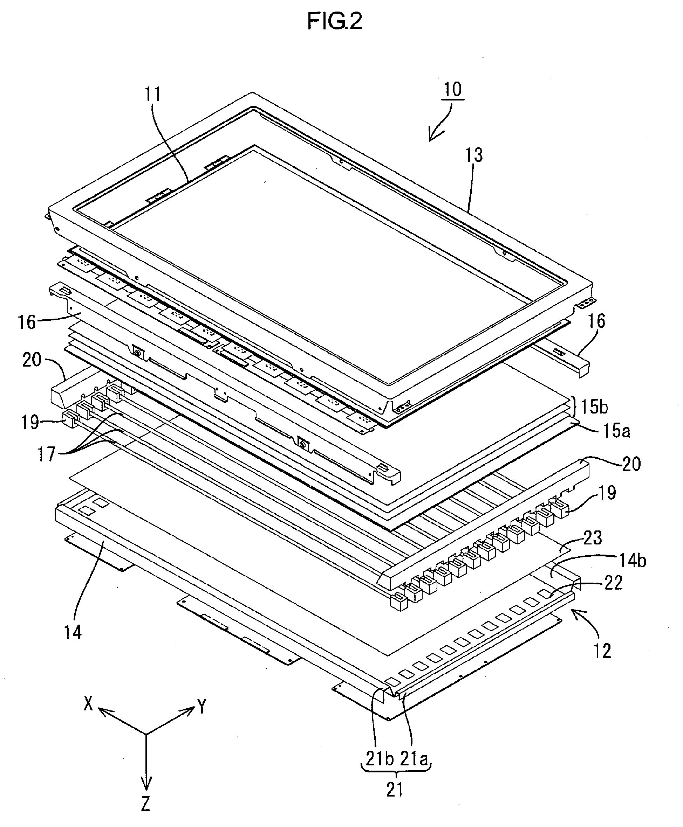

As illustrated in FIG. 1, the television receiver TV of this embodiment includes the liquid crystal display device 10, a front cabinet Ca, a rear cabinet Cb, a power source P, a tuner T, and a stand S. The cabinets Ca and Cb sandwich the liquid crystal display device 10 therebetween. The liquid crystal display device 10 is housed in the cabinets Ca and Cb. The liquid crystal display device (a display device) 10 is held by a stand S in a vertical position in which a display surface 11a is set along a substantially vertical direction. The liquid crystal display device 10 has a landscape rectangular overall shape. As illustrated in FIG. 2, the liquid crystal display device 10 includes a liquid crystal panel 11, which is a display panel, and a backlight unit (a lighting device) 12, which is an external light source. The liquid crystal panel 11 and the backlight unit 12 are held together by a frame-shaped bezel 13. X-axes, Y-axes and Z-axes are shown in the drawings. The axes indicate the respective directions in the drawings.

Next, the liquid crystal panel 11 and the backlight unit 12 included in the liquid crystal display device 10 will be explained (see FIGS. 2 to 4).

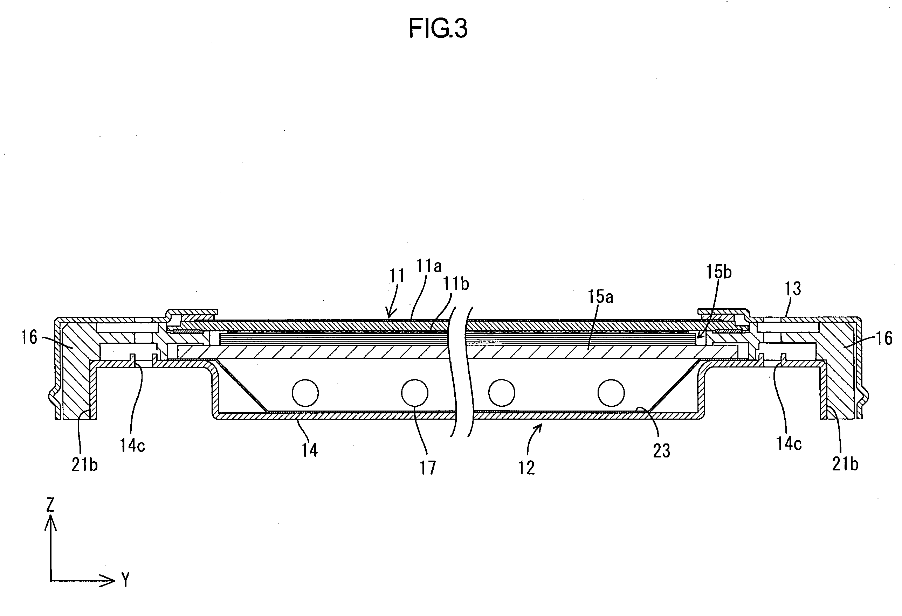

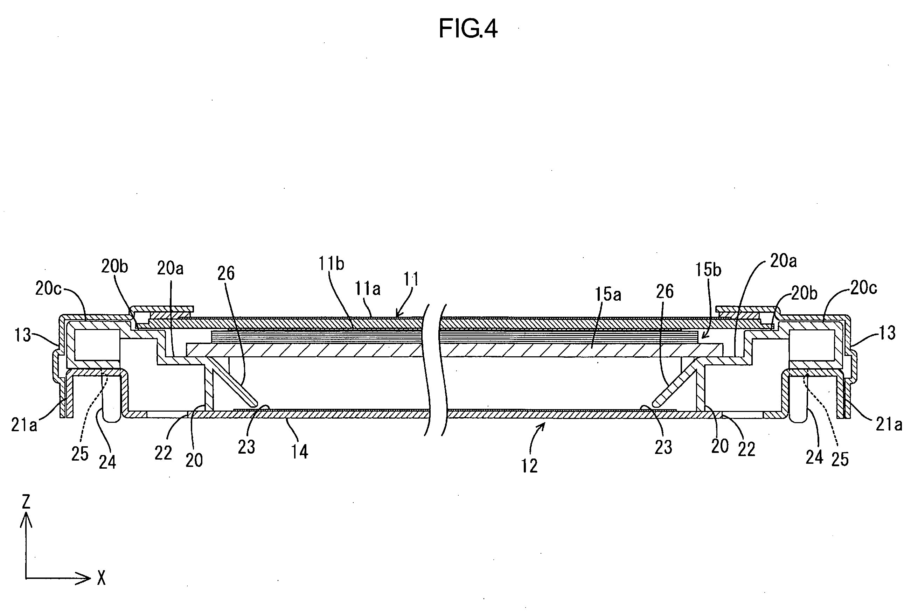

The liquid crystal panel (a display panel) 11 includes a pair of transparent glass substrates bonded together with a predetermined gap therebetween and liquid crystals sealed between the substrates. On one of the glass substrates, switching components (e.g., TFTs), pixel electrodes and an alignment film are arranged. The switching components are connected to gate lines and the source lines that are perpendicular to each other. The pixel electrodes are connected to the switching components. On the other glass substrate, color filters including R (red) G (green) B (blue) color sections in predetermined arrangement, a counter electrode and an alignment film are arranged. Polarizing plates 11a and 11b are arranged on outer surfaces of the glass substrates, respectively (see FIG. 3 and 4).

As illustrated in FIG. 2, the backlight unit 12 includes a chassis 14, a diffuser 15a, a plurality of optical sheets 15b and frames 16. The chassis 14 has a box-like overall shape and an opening 14b on a light exit surface side (the liquid crystal panel 11 side). The diffuser 15a is arranged so as to cover the opening 14b of the chassis 14. The optical sheets 15b are arranged between the diffuser 15a and the liquid crystal panel 11. The frames 16 are arranged along the respective long sides of the chassis 14. Long-side edges of the diffuser 15a are sandwiched between the chassis 14 and the respective frames 16. The backlight unit 12 further includes cold cathode tubes (lamps, light sources) 17, lamp clips 18, relay connectors 19 and holders 20 within the chassis 14. The lamp clips 18 are provided for mounting the cold cathode tubes 17 to the chassis 14. The relay connectors 19 are provided for establishing electric connections at ends of the cold cathode tubes 17. The holders 20 collectively cover the ends of the cold cathode tubes 17 and the relay connectors 19. In the backlight unit 12, a diffuser 15a side with respect to the cold cathode tubes 17 is a light exiting side. In FIGS. 2 to 4, the lamp clips 18 are not shown.

The chassis 14 is made of metal and formed in a shallow-box-like shape by sheet metal processing. The chassis 14 includes a rectangular bottom plate 14a, and outer rim portions 21, each of which extends upright from the corresponding side of the bottom plate 14a and has a substantially U shape. The outer rim portions 21 include short-side outer rim portions 21a and long-side outer rim portions 21b provided at the short sides and the long sides of the chassis 14, respectively. The bottom plate 14a has a plurality of through holes, connector mounting holes 22, along the long-side edges thereof for mounting the relay connectors 19. As illustrated in FIG. 3, fixing holes 14c are provided in the upper surface of the chassis 14 along the long-side outer rims 21b to bind the bezel 13, the frames 16 and the chassis 14 together with screws.

A reflection sheet 23 is disposed on an inner surface of the bottom plate 14a of the chassis 14 (on a side that faces the cold cathode tubes 17 or the diffuser 15a, the front-surface side). The reflection sheet 23 is a synthetic resin sheet having a surface in white that provides high light reflectivity. It is placed along the bottom plate surface of the chassis 14 so as to cover about an entire area of the bottom plate surface. In the chassis 14, the reflection sheet 23 is a reflection surface configured to reflect light from the cold cathode tubes 17 toward the diffuser 15a. As illustrated in FIG. 3, long-side edges of the reflection sheet 23 are lifted so as to cover the long-side outer rims 21b of the chassis 14 and sandwiched between the chassis 14 and the diffuser 15a. With the reflection sheet 23, light emitted from the cold cathode tubes 17 is reflected toward the diffuser 15a.

Each cold cathode tube 17 has an elongated tubular shape. A plurality of the cold cathode tubes 17 are housed in the chassis 14. They are arranged parallel to each other with the long-side direction thereof (the axial direction) aligned with the long-side direction of the chassis 14 (see FIG. 2). Each cold cathode tube 17 is slightly separated from the bottom plate 14a (or the reflection sheet 23) of the chassis 14, and ends thereof are fitted in the respective relay connectors 19. The holders 20 are mounted so as to cover the relay connectors 19.

The holders 20 are made of white synthetic resin. Each of them has an elongated substantially box shape that extends along the short side of the chassis 14. As illustrated in FIG. 4, each holder 20 has steps on the front side such that the diffuser 15a and the liquid crystal panel 11 are held at different levels. A part of the holder 20 is placed on top of a part of the corresponding short-side outer rim 21a of the chassis 14 and forms a sidewall of the backlight device 12 together with the short-side outer rim 21a. Insertion pins 24 project from a surface of the holder 20 facing the outer rim 21a of the chassis 14. The holder 20 is mounted to the chassis 14 by inserting the insertion pins 24 into the insertion holes 25 provided in the top surface of the short-side outer rim 21a of the chassis 14.

The steps of the holder 20 include three surfaces parallel to the bottom plate surface of the chassis 14. The short edge of the diffuser 15a is placed on the first surface 20a at the lowest level. A sloped cover 26 extends from the first surface 20a toward the bottom plate surface of the chassis 14. A short edge of the liquid crystal panel 11 is placed on the second surface 20b. The third surface 20c at the highest level is provided such that it overlaps the short-side outer rim 21a of the chassis 14 and comes in contact with the bezel 13.

The diffuser 15a includes a plate-like member made of synthetic resin and light-scattering particles scattered inside the plate-like member. The diffuser 15a diffuses linear light emitted from the cold cathode tubes 17 that are tubular light sources. The short-side edges of the diffuser 15a are placed on the first surfaces 20a of the holders 20 and no binding force is applied thereto in the vertical direction. As illustrated in FIG. 3, each long-side edge of the diffuser 15a is sandwiched between the chassis 14 (or the reflection sheet 23) and the frame 16, and fixed.

The optical sheets 15b on the diffuser 15a include a diffusing sheet, a lens sheet, and a reflecting-type polarizing plate layered in this order form the diffuser 15a side. The optical sheet 15b has a function of converting light emitted from the cold cathode tubes 17 and passed through the diffuser 15a to planar light. The liquid crystal panel 11 is arranged on the uppermost surface of the optical sheets 15b. The optical sheets 15b are sandwiched between the diffuser 15a and the liquid crystal panel 11.

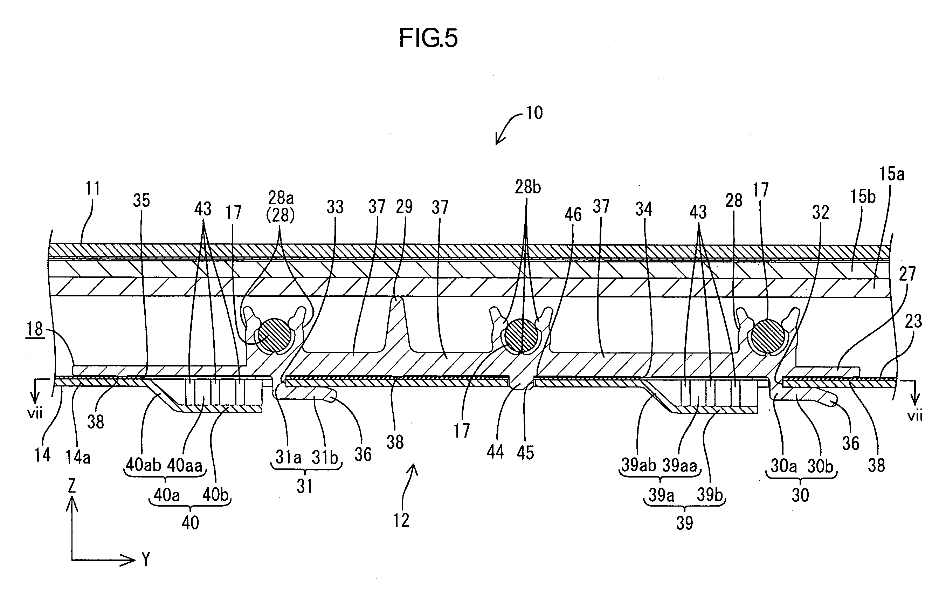

Next, the lamp clips 18 will be explained. The lamp clips 18 are arranged in dispersed locations within the bottom plate 14a of the chassis 14. Each lamp clip 18 is made of synthetic resin (e.g., polycarbonate) with surfaces in white that provides high light reflectivity. As illustrated in FIG. 5, the lamp clip 18 includes a main body 27 having a plate-like shape that extends along the bottom plate 14a (or the reflection sheet 23) of the chassis 14. The main body 27 is formed substantially in a rectangular shape in plan view. Each lamp clip 18 is mounted to the chassis 14 in a position (an orientation or in a condition) such that the length direction (the long-side direction) of the main body 27 matches the Y-axis direction. Namely, the lamp clip 18 is in a position substantially parallel to the short-side direction of the chassis 14, or perpendicular to the axial direction of the cold cathode tube 17 (the length direction or the X-axis direction) and substantially parallel to a direction along the plate surface of the bottom plate 14a of the chassis 14. In the following description, the upper side and the lower side in the Z-axis direction in FIG. 5 are referred to as the front-surface side and the rear-surface side, respectively.

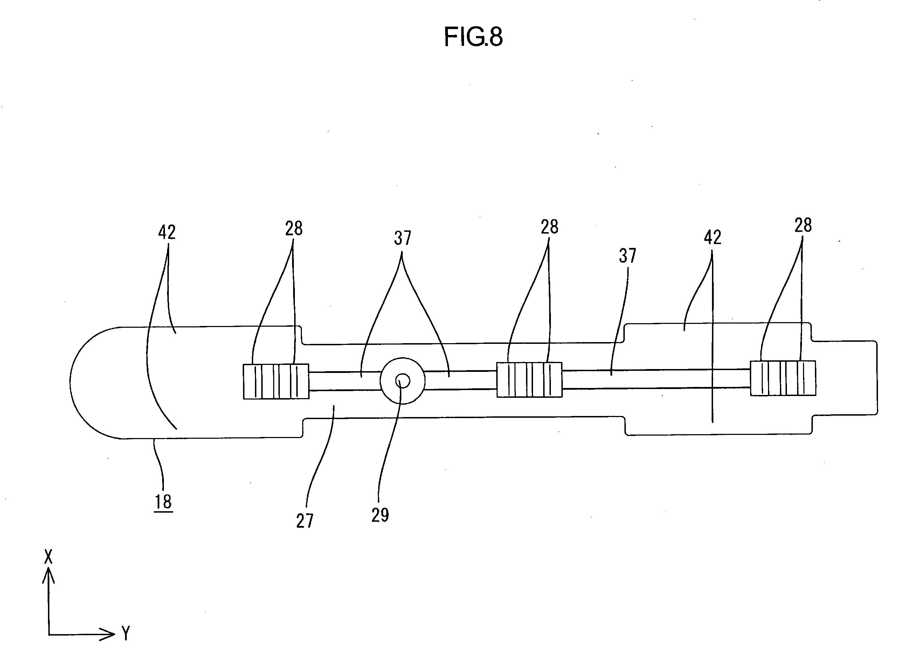

As illustrated in FIGS. 5 and 8, lamp holding parts 28 and a support pin 29 are provided on a surface of the main body 27 on the front-surface side (a surface opposite the diffuser 15a and the cold cathode tubes 17, a surface opposite from the chassis 14). Each lamp holding part 28 is provided for holding the cold cathode tube 17 at a predetermined level. The support pin 29 is provided for supporting the diffuser 15a at a higher level than the cold cathode tube 17. Three lamp holding parts 28 are arranged on the main body 27 away from each other in the length direction of the main body 27 (the Y-axis direction). They hold the different cold cathode tubes 17. Each lamp holding part 28 includes a pair of arms 28a that rise from the main body 27 toward the front. Each arm 28a is in a form of a cantilever arm. Each arm 28a has a support protrusion 28b that protrudes inward from the inner surface of a distal-end portion thereof. Furthermore, a support protrusion 28b in the same shape as the above support protrusion 28b is provided on the inner bottom surface of the lamp holding part 28. The lamp holding part 28 holds the cold cathode tube 17 at the three points with the support protrusions 28b. A gap to which light travels is provided between the outer periphery of the cold cathode tube 17 and the inner surface of the lamp holding part 28. Intervals between the lamp holding parts 28 are substantially constant and equal to intervals between the cold cathode tubes 17 arranged inside the chassis 14. The support pin 29 is located around the middle between the left lamp holding part 28 and the center lamp holding part 28 in FIG. 5 with respect to the length direction of the main body 27. The support pin 29 projects more to the front-surface side than the lamp holding parts 28, that is, it is highest in the lamp clip 18. During mounting or removing the lamp clip 18 to or from the chassis 14, a worker can use the support pin 29 as a holding part, that is, the worker holds the support pin 29 during the mounting or the removing. Furthermore, a rib 37 is provided on the front surface of the main body 27. It extends along the Y-axis direction and continues into the lamp holding parts 28.

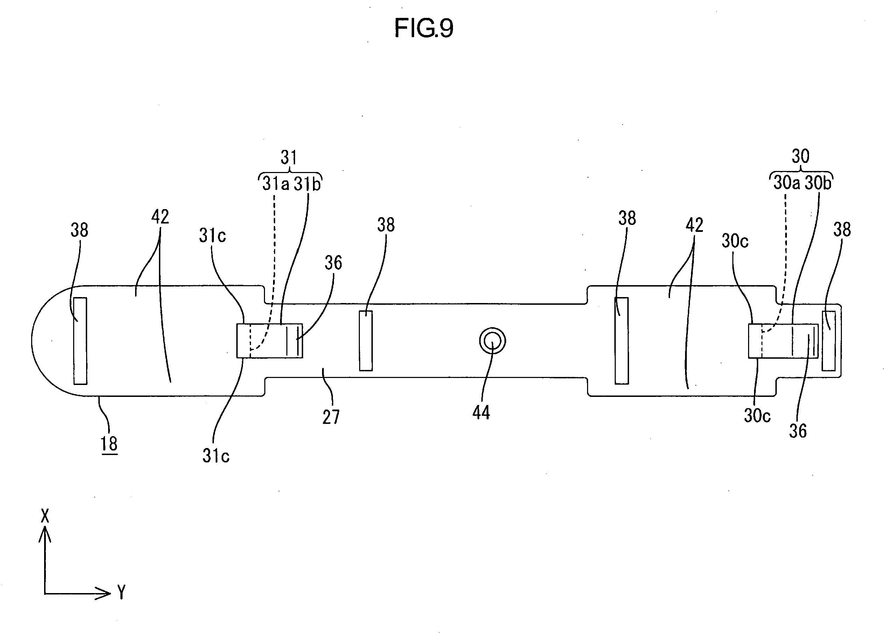

As illustrated in FIGS. 5 and 9, two mounting parts 30 and 31 are provided on the rear surface of the main body 27 (on the surface opposite the chassis 14 and the reflection sheet 23, or the surface opposite from the diffuser 15a and the cold cathode tubes 17). The mounting parts 30 and 31 are provided as mounting structures for holding the lamp clip 18 to the chassis 14 in a condition that it is mounted. The mounting parts 30 and 31 are away from each other in the length direction of the main body 27. The bottom plate 14a of the chassis 14 has two mounting holes for each lamp clip 18 in a location where the lamp clip 18 is mounted. The mounting holes 32 and 33 are provided as mounting structures for the lamp clip 18. In the mounting holes 32 and 33, the corresponding mounting parts 30 and 31 are inserted, respectively. The reflection sheet 23 has two insertion holes 34 and 35 for each lamp clip 18 in which the mounting parts 30 and 31 are inserted, respectively. The insertion holes 34 and 35 are provided continuously from the respective mounting holes 32 and 33 of the chassis 14. To distinguish one of the mounting parts 30 and 31 from the other, they are numbered from the right in FIG. 5 and referred to as the first mounting part 30 and the second mounting part 31. To distinguish one of the mounting holes 32 and 33 from the other, they are numbered from the right in FIG. 5 and referred to as the first mounting hole 32 and the second mounting hole 33. To distinguish one of the insertion holes 34 and 35 from the other, they are numbered from the right in FIG. 5 and referred to as the first insertion hole 34 and the second insertion hole 35. Furthermore, four enforcement ribs 38 are provided at predetermined locations on the rear surface of the main body 27. Each enforcement rib 38 extends along the X-axis direction. The enforcement ribs 37 and 38 that are perpendicular to each other and provided on the front surface and the rear surface, respectively, increase the strength of the main body 27.

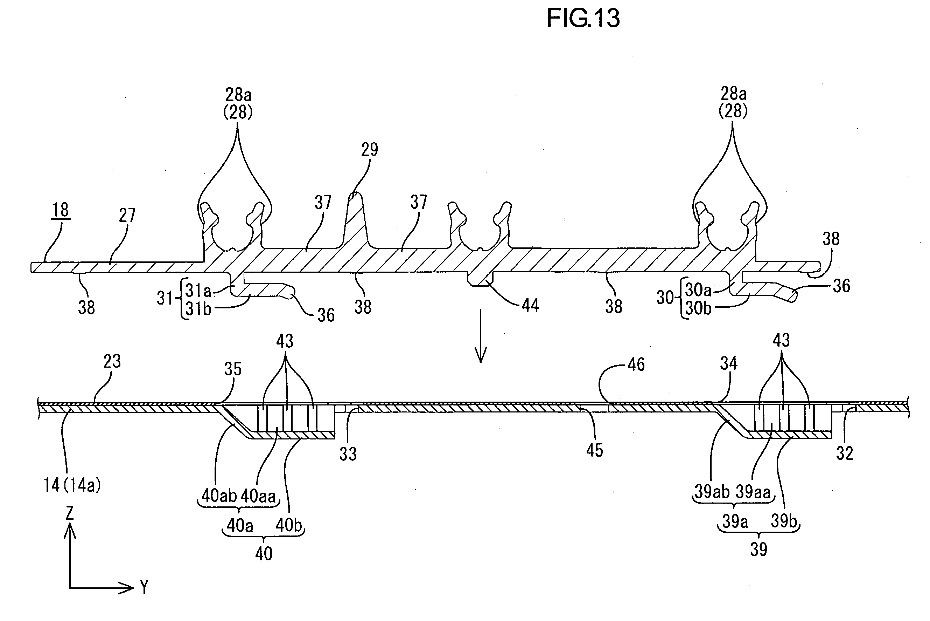

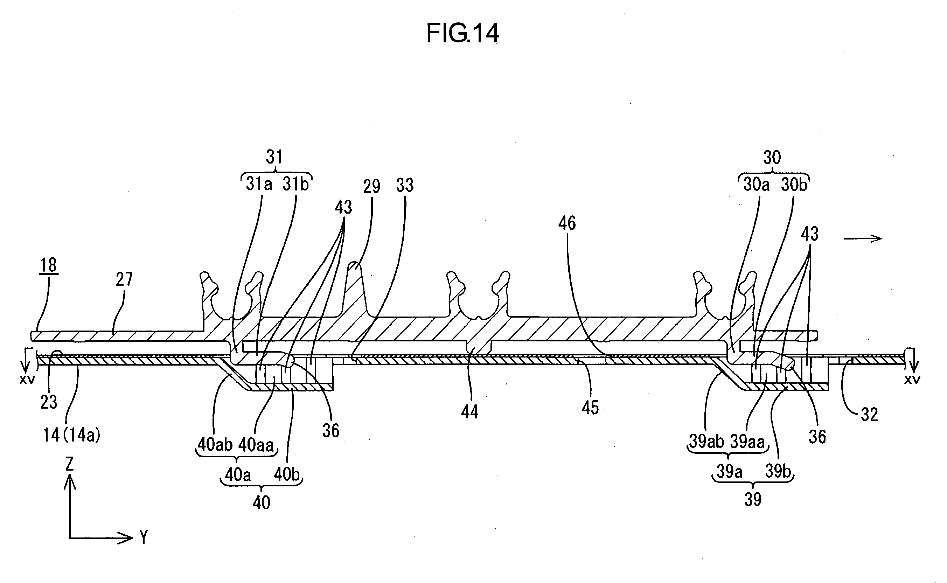

Next, the mounting structures for mounting the lamp clips 18 to the chassis 14, mentioned earlier, will be explained in detail. First of all, overviews of the mounting structures and a mounting procedure will be briefly explained. As illustrated in FIG. 5, the mounting parts 30 and 31 are formed in hook-like shapes that extend along the rear surface (the plate surface) of the main body 27. The mounting parts 30 and 31 are inserted in the respective mounting holes 32 and 33 of the chassis 14, and the respective insertion holes 34 and 35 of the reflection sheet 23 so as to project from the rear of the chassis 14. Then, the lamp clip 18 is slid along the length direction of the main body 27 (the Y-axis direction or the plate surface direction of the bottom plate 14a of the chassis 14). As a result, the chassis 14 and the reflection sheet 23 are sandwiched between the main body 27 and the mounting parts 30 and 31 (see FIGS. 13 and 14). The sliding direction in which the lamp clip 18 is slid with respect to the chassis 14 matches the Y-axis direction. Next, detailed structures of the mounting parts 30, and 31, the mounting holes 32 and 33, and the insertion holes 34 and 35 will be explained.

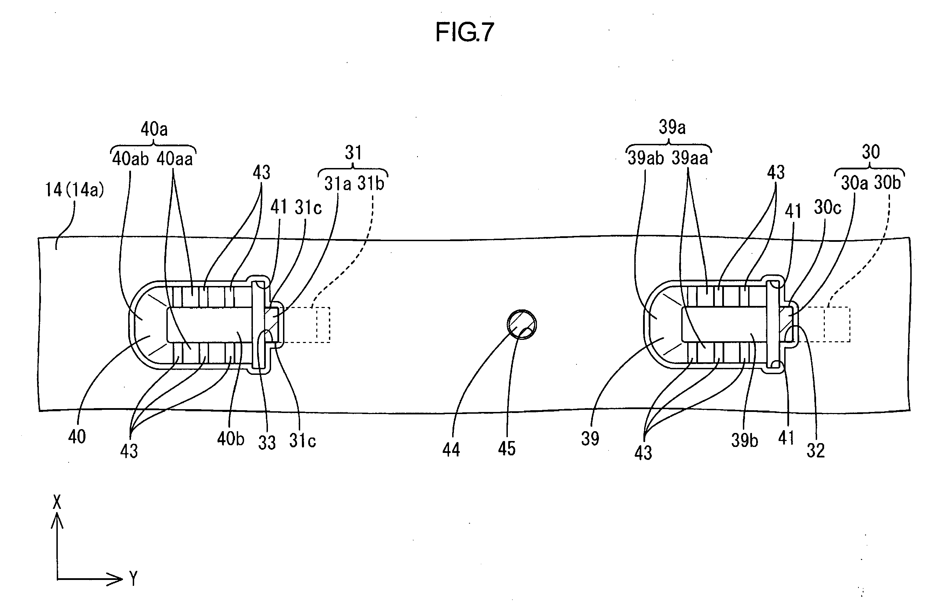

As illustrated in FIG. 9, the first mounting part 30 and the second mounting part 31 are rectangular in plan view. The length direction (the long-side direction) and the width direction (the short-side direction) of the first mounting part 30 and the second mounting part 31 match those of the main body 27, respectively. Side surfaces 30c of the first mounting part 30 and side surfaces 31c of the second mounting part 31 located at ends of the X-axis dimension thereof are substantially flat surfaces parallel to the Y-Z plane. The first mounting part 30 and the second mounting part 31 are located around the center of the main body 27 in the width direction. As illustrated in FIG. 5, each of the first mounting part 30 and the second mounting part 31 includes a base portion 30a/31a and a holding portion 30b/31b. The base portion 30a/31a projects from the rear surface of the main body 27 to the rear-surface side (to the chassis 14 side). The holding portion 30b/31b projects from end of the base portion 30a/31a and extends along the main body 27. The first mounting part 30 and the second mounting part 31 have L-like shapes in front view. The base portion 30a/31a projects from the main body 27 in the Z-axis direction, that is, in the direction perpendicular to the plate surface of the main body 27. Namely, the base portion 30a/31a rises substantially upright from the main body 27. As illustrated in FIG. 7, the base portion 30a/31a has a rectangular cross section when they are cut along the main body 27. The short-side direction of the base portion 30a/31a matches the Y-axis direction, and the long-side direction thereof matches the X-axis direction.

As illustrated in FIG. 5, the base portion 30a of the first mounting part 30 is located on the rear side (the rear-surface side) of the right lamp holding part 28 in FIG. 5 among those on the main body 27. Namely, the first mounting part 30 is located on the rear-surface side behind the lamp holding part 28 in an edge portion away from the support pin 29. The holding portion 30b of the first mounting part 30 projects from the base portion 30a in the opposite direction to the support pin 29. The holding portion 30b has a length defined such that a distal end thereof is located inner than the right end of the main body 27 in FIG. 5, that is, the front end of the main body 27 in the mounting direction. The base portion 31a of the second mounting part 31 is located on the rear side (the rear-surface side) of the left lamp holding part 28 in FIG. 5 among those on the main body 27. Namely, the second mounting part 31 is located on the opposite side of the first mounting part 30 with respect to the support pin 29 along the length direction of the main body 27. The holding portion 31b extends from the base portion 31a to the support pin 29 side and has a length larger than that of the holding portion 30b of the first mounting part 30.

As illustrated in FIG. 5, the holding portions 30b and 31b are formed in cantilever plate-like shapes so as to project from the ends of the base portions 30a and 31a, respectively, and extend to the right in FIG. 5 in the length direction of the main body 27 (the Y-axis direction). The sliding direction in which the lamp clip 18 is slid during mounting the lamp clip 18 to the chassis 14, that is, a mounting direction matches a direction in which the holding portions 30b and 31b extend from the base portions 30a and 31a (a direction to the right in FIG. 5). The sliding direction in which the lamp clip 18 is slid during removal of the lamp clip 18 from the chassis 14, that is, a removal direction matches a reverse direction opposite to the direction in which the holding portions 30b and 31 project from the base portions 30a and 31a (a direction to the left in FIG. 5). The holding portions 30b and 31b project from the ends of the respective base portions 30a and 31a substantially perpendicular to the base portion 30a and 31a, and extend parallel to the main body 27. Moreover, the holding portions 30b and 31b face the main body 27. Each of the holding portions 30b and 31b is elastically deformable (or elastically movable) in the Z-axis direction with the base point, at which the holding portion 30b/31b connects to the base portion 30a/31a, as a support point. Namely, it is elastically deformable in a direction that crosses an extending direction in which the holding portion 30b/31b extends from the base portion 30a/31a. The holding portions 30b/31b moves toward or away from the main body 27 according to the elastic deformation. A distance between each holding portion 30b/31b and the main body 27 is substantially equal to or larger than a sum of thicknesses of the chassis 14 and the reflection sheet 23. As illustrated in FIG. 9, each holding portion 30b/31b is a rectangular in plan view with the long-side direction and the short-side direction aligned with the Y-axis direction (the sliding direction) and the X-axis direction, respectively. The X-axis dimensions of each holding portion 30b/31b and each base portion 30a/31a (the short-side dimension (the width) of each mounting part 30/31) are substantially the same.

The holding portion 30b of the first mounting part 30 and the holding portion 31b of the second mounting part 31 have guides 36 at the ends (the distal ends). The guide 36 is configured to support mounting of the lamp clip 18 to the chassis 14. The guide 36 is tilted so as to form an obtuse angle with the holding portion 30b, that is, the guide 36 is angled with respect to the holding portion 30b so as to separate farther away from the main body 27. Namely, the guide 36 is formed such that a distance to the main body gradually increases as it goes toward the tip. The thickness of the guide 36 is constant throughout the length thereof. A size of projection of the guide 36 of the first mounting part 30 is larger than that of the guide 36 of the second mounting part 31. A gap between the distal end of the guide 36 of the first mounting part 30 and the main body 27 is larger than a gap between the distal end of the guide 36 of the second mounting part 31. Namely, an opening through which the edge of the first mounting hole 32 is inserted is larger than an opening through which the edge of the second mounting hole 33 is inserted.

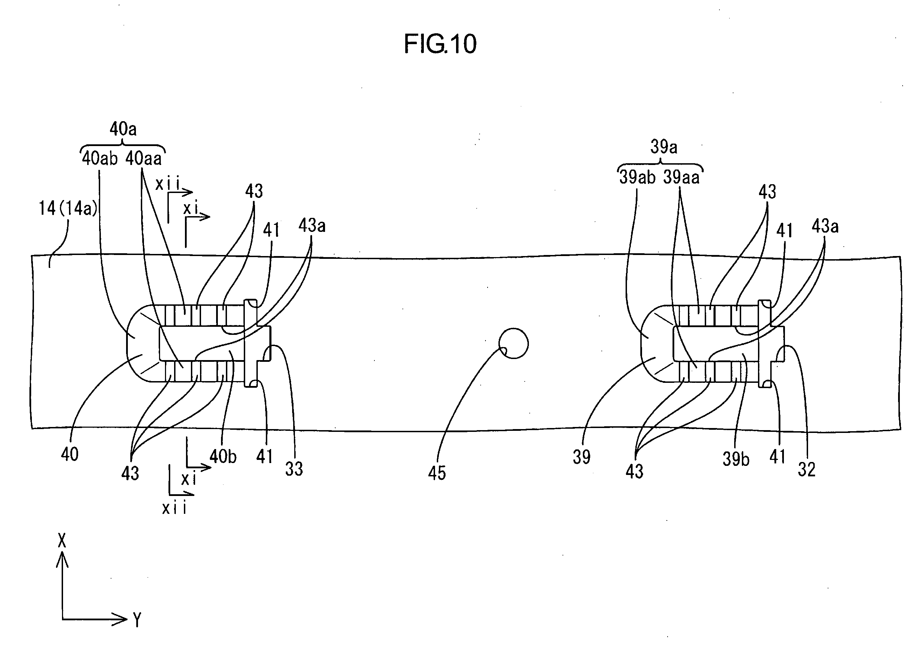

Next, the first mounting holes 32 and the second mounting holes 33 formed in the chassis 14 will be explained. As illustrated in FIGS. 5 and 10, each first mounting hole 32 and each second mounting hole 33 are through holes formed in the bottom plate 14a. They are provided for passing the corresponding first mounting part 30 and the corresponding second mounting part 31 through the chassis 14 to the rear-surface side. The widths of the first mounting hole 32 and the second mounting hole 33 (measuring in the X-axis direction) are equal to or larger than those of the first mounting part 30 and the second mounting part 31, respectively. Therefore, side surfaces 30c and 31c located at ends of the X-axis dimensions of the base portions 30a and 31a of the mounting parts 30 and 31 are in contact with the inner walls of the mounting holes 32 and 33, respectively.

The chassis 14 also has receiving portions 39 and 40. The receiving portions 39 and 40 are provided adjacent to the first mounting hole 32 and the second mounting hole 33, respectively, on the left sides in FIG. 5. Namely, parts of the chassis 14 adjacently located to the mounting parts 30 and 32, respectively, on opposite sides of the mounting parts 30 and 31 to edges of the mounting holes 32 and 33 held by the holding portions 30b and 31b project outward to the rear-surface side so as to receive the mounting parts 30 and 31, respectively. Each of the receiving portions 39 and 40 is formed in a pouch-like shape. Each receiving portion 39/40 has an opening on the inner side of the chassis 14 (the front side in the Z-axis direction) and on the mounting hole 32/33 side (the right side in the Y-axis direction). The mounting parts 30 and 31 are inserted in or removed from the receiving portions 39 and 40, respectively, along the Z-axis direction from or to the front side, and along the Y-axis direction from or to the right side. The lamp clip 18 can be moved among three positions along the Z-axis direction or the Y-axis direction in sequence that can be reversed. The positions include: a removed position in which the mounting part 30/31 is completely removed from the bottom plates 14a of the chassis 14 (FIG. 13); a hold position in which the mounting part 30/31 is in the receiving portion 39/40 but out of the mounting hole 32/33 (FIG. 14); a mounting position in which the mounting part 30/31 is out of the receiving portion 39/40 but in the mounting hole 32/33 (FIG. 5). To distinguish one of the receiving portions 39 and 40 from the other, they are numbered from the right in FIG. 5 and referred to as the first receiving portion 39 and the second receiving portion 40.

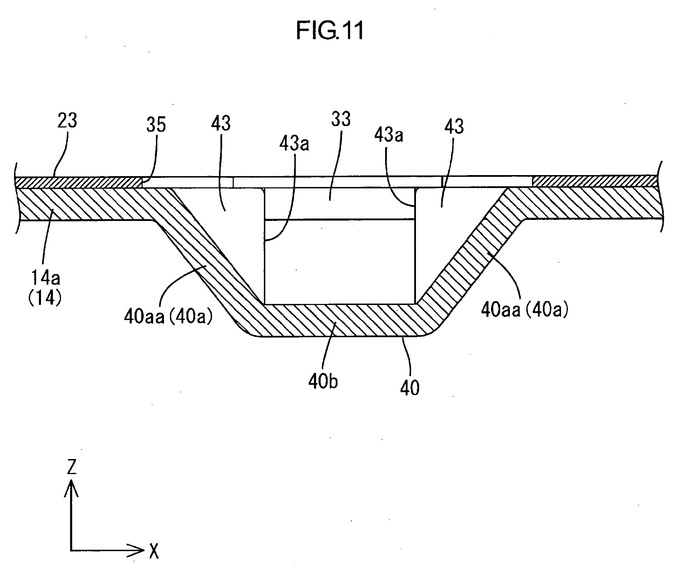

As illustrated in FIG. 10, each of the receiving portions 39 and 40 is substantially rectangular in plan view similar to the first mounting parts 30 and the second mounting parts 31. The long-side direction and the short-side direction of the receiving portion 39/40 match those of the mounting part 30/31. As illustrated in FIGS. 5 and 11, the receiving portion 39/40 includes sidewalls 39a/40a that rise outward from the bottom plate 14a of the chassis 14 to the rear-surface side, and a bottom wall 39b/40b that continues from distal ends of the sidewalls 39a/40a. The sidewalls 39a/40a are angled and thus an overall shape of the receiving portion 39/40 is a tapered shape that tapers toward a distal end. The sidewalls 39a/40a include long sidewalls 39aa/40aa along the Y-axis direction (the long-side direction, the sliding direction of the lamp clip 18) and a short sidewall 39ab/40ab along the X-axis direction (the short-side direction). The short sidewall 39ab/40ab bridges edges of the long sidewalls 39a/40a away from the mounting hole 32/33. Ends of the long sidewalls 39aa/40aa and the bottom wall 39b/40b on a side opposite from the short sidewall 39ab/40ab form an opening edge of the opening that opens toward the mounting hole 32/33. The sidewalls 39a/40a are tilted so as to form an obtuse angle with the bottom plate 14a of the chassis 14. Therefore, the receiving portion 39/40 is formed in a tapered shape, that is, the long dimension and the short dimension of the receiving portion 39/40 gradually decrease toward the distal end (the rear-surface side). An inner space becomes larger toward the base portion (on the front-surface side), that is, a size of inner space of the receiving portion 39/40 gradually increases toward the base portion (on the front-surface side) of the sidewalls 39a/40a. When the lamp clip 18 is moved from the removed position to the hold position, the mounting part 30/31 can be easily inserted in the receiving portion 39/40.

As illustrated in FIG. 10, a distance between distal ends of the long sidewalls 39aa/40aa among the sidewalls 39a/40a of the receiving portion 39/40, that is, the width of the bottom wall 39b/40b (a dimension measuring in the X-axis direction) is substantially equal to the widths of the mounting part 30/31 and the mounting hole32/33. As illustrated in FIG. 5, the depth of each receiving portion 39/40, that is, a distance between the front surface of the bottom plate 14a of the chassis 14 and the inner surface of the bottom wall 39b/40b is substantially equal to the size of projection of the mounting part 30/31 from the main body 27. The bottom wall 39b/40b is opposite the main body 27 of the lamp clip 18 when the lamp clip 18 is mounted.

The receiving portion 39/40 includes the tilted sidewalls 39a/40a. Therefore, the largest width of the receiving portion 39/40, that is, the distance between bases of the long sidewalls 39aa/40aa is larger than the width of the mounting part 30/31 or the mounting hole 32/33 by the thicknesses of the long sidewalls 39aa/40aa as illustrated in FIG. 10. To form the sidewalls 39a/40a so as to rise from the bottom plate 14a of the chassis 14, a slit 41 is formed in a part of the bottom plate 14a adjacent to the sidewalls 39a/40a and the mounting hole 32/33 (a boundary area). The slit 41 continues from the mounting hole 32/33.

As described above, the sidewalls 39a/40a of the receiving portion 39/40 are tilted so that the mounting part 30/31 can be easily inserted in the receiving portion 39/40. They are tilted also because of manufacturing-related reasons. In manufacturing process of the chassis 14, the receiving portion 39/40 is formed in a part of the bottom plate 14a by drawing. To effectively perform the drawing, the sidewalls 39a/40a should be tilted. With the tilted sidewalls 39a/40a, production efficiency of the chassis 14 increases. When the sidewalls 39a/40a are formed by drawing, stress concentrates at a boundary between the bases thereof and the bottom plates 14a. To disperse the stress, the slit 41 is wider than a dimension defined by the bases of the long sidewalls 39aa/40aa of the sidewalls 39a/40a. Specifically, the slit 41 cuts into the areas outer than the bases of the long sidewalls 39aa/40aa in the X-axis direction.

Because the bottom plate 14a of the chassis 14 has the receiving portions 39 and 40, the lamp clip 18 can be set in the hold position relative to the bottom plate 14a of the chassis 14. If holes are formed continuously from the mounting holes 32 and 33, respectively, as receiving portions, a size of the openings are equal to the size of the mounting parts 30 and 31 in plan view. In comparison to that, the bottom plate 14a of this embodiment only has the mounting holes 32 and 33, and opening areas thereof are significantly smaller than plan-view sizes of the mounting parts 30 and 31. Namely, the opening areas of the bottom plate 14a are smaller than the other case because of the receiving portions 39 and 40 in pouch-like shapes. The opening areas are in minimum sizes required for the mounting parts 30 and 31 to project from the rear surface of the chassis 14 to the outside. If light emitted from the cold cathode tubes 17 passes through the lamp clip 18 at some level, an amount of light that leaks to the outside on the rear-surface side through the openings (the mounting holes 32 and 33) in the bottom plate 14a of the chassis 14 is maintained at a minimum level.

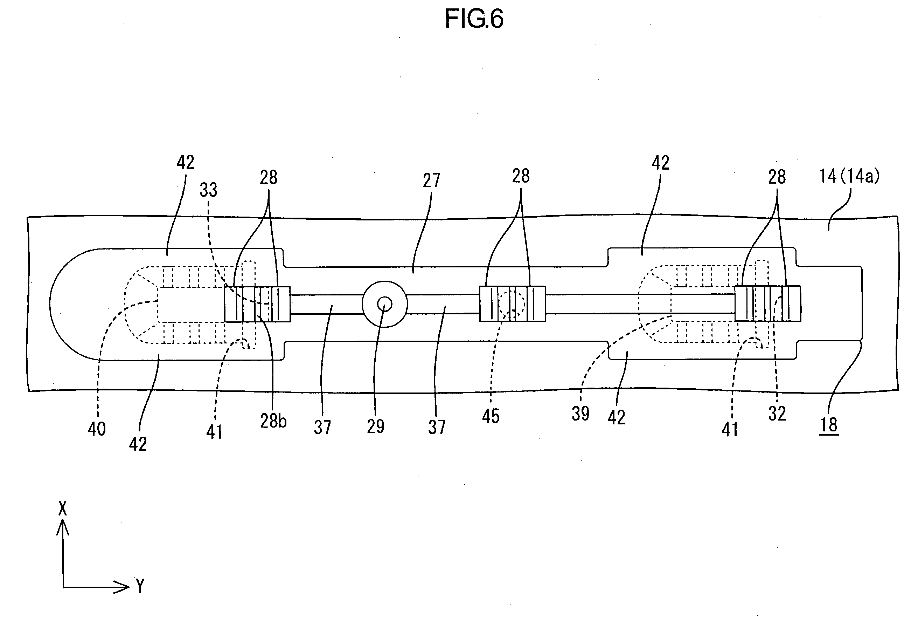

Each receiving portion 39/40 has the tilted sidewalls 39a/40a and a plan-view size larger than the mounting part 30/31. The receiving portions 39 and 40 are formed such that parts of the bottom plate 14a (the reflection sheet 23) in which the receiving portions 39 and 40 are formed do not touch the main body 27 of the lamp clip 18. As illustrated in FIG. 6, the main body 27 of the lamp clip 18 has wide portions 42 in areas corresponding to the receiving portions 38 and 40. The wide portions 42 have widths larger than those of the receiving portions 39 and 40. When the lamp clip 18 is in the mounting position, the areas of the main body 27 overlap the receiving portions 39 and 40 in plan view. The wide portions 42 having widths relatively larger than the other areas are located in the overlapping areas. With this configuration, the main body 27 does not fall in the receiving portions 39 and 40 when it is set in the mounting position. Therefore, the mounting condition of the lamp clip 18 is stabilized.

The sliding movement of each lamp clip 18 during mounting or removal is guided by contact portions 43 in each receiving portion 39/40. Each contact portion 43 is formed by projecting a part of the wall of the receiving portion 39/40 inward. When the mounting part 30 and 31 are inserted in the respective receiving portions 39 and 40, the contact portions 43 are in contact with the mounting parts 30 and 31. As illustrated in FIGS. 5 and 10, each contact portion 43 is formed by hammering a part of the long sidewall 39aa/40aa that is along the Y-axis direction, that is, the sliding direction in which the lamp clip 18 is slid (along the main body 27) among the sidewalls 39a/40a of the receiving portion 39/40. The part of the long sidewall 39aa/40aa is hammered inward. In the manufacturing process of the chassis 14, each receiving portion 39/40 is formed by drawing a part of the bottom pate 14a so as to bulge outward from the bottom wall 39b/40b. Then, the contact portions 43 are formed. Each contact portion 43 is formed by hammering a part of the long sidewall 39aa/40aa among the tilted sidewalls 39a/40a of the receiving portion 39/40. The part of the long sidewall 39aa/40aa projects inward. Because the contact portions 43 are formed by hammering, a dimensional accuracy thereof is higher than that of walls 39a, 39b, 40a and 40b of the receiving portions 39 and 40 that are formed by drawing.

The contact portions 43 are provided on the long sidewalls 39aa/40aa of the receiving portions 39/40. The long sidewalls 39aa/40aa are opposed to each other. The contact portions 43 on the opposed long sidewalls 39aa/40aa are opposed to each other. Three contact portions are arranged along the Y-axis direction on each long sidewall 39aa/40aa. A distance between the contact portions 43 that are adjacent to each other in the Y-axis direction is smaller than a Y-axis dimension of the mounting part 30/31. Specifically, a sum of the distance between the contact portions 43 measuring in the Y-axis direction and the Y-axis dimensions of the contact portions 43 is smaller than the Y-axis dimension of the mounting part 30/31. Namely, the distance between the contact portions 43 is equal to or smaller than a half of the Y-axis dimension of the mounting part 30/31. Moreover, the Y-axis dimension of the contact portion 43 is equal to or smaller than one third of the Y-axis dimension of the mounting part 30/31.

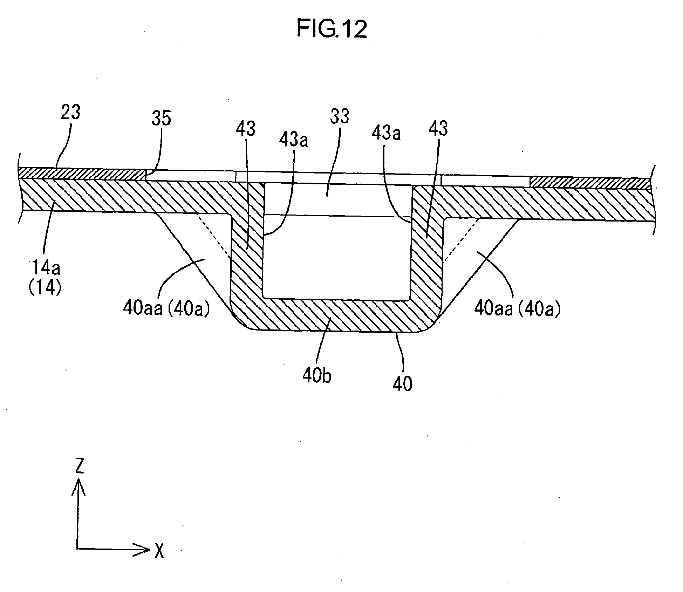

As illustrated in FIGS. 10 and 12, each contact portion 43 is formed such that the inner surface 43a is a flat surface parallel to the Y-Z plane. The inner surface 43a of the contact portion 43 is opposite the side surface 30c/31c of the mounting part 30/31 and is a contact surface that is in contact with the side surface 30c/31c when the mounting part 30/31 is inserted in the receiving portion 39/40. The inner surface 43a of the contact portion 43 and the side surface 30c/31c of the mounting part 30/31, which are in contact with each other, are parallel to each other and in surface contact. The contact portion 43 extends the entire Z-axis dimension of the receiving portion 39/40, that is, an entire dimension measuring along the projecting direction in which the base portion 30a/31a projects from the main body 27. The X-axis position of the inner surface 43a of the contact portion 43 is substantially at the same position as the boundary between the long sidewall 39aa/40aa and the bottom wall 39b/40b in the receiving portion 39/40. Namely, a distance between the opposed contact portions 43 is substantially equal to or slightly larger than the width of the mounting part 39b/40b and the width of the bottom wall 39b/40b. A distance between the inner surfaces 43 of the opposed contact portions 43 is constant in the entire area along the Y-axis direction and the Z-axis direction. The inner surface 43a of the contact portion 43 is not leveled with the tilted inner surface of the long sidewall 39aa/40aa of the receiving portion 39/40.

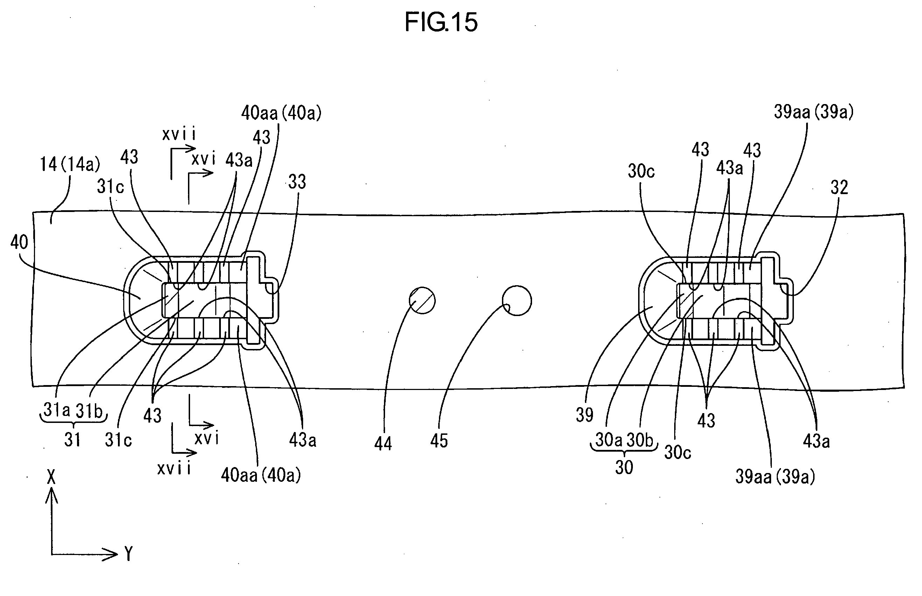

As illustrated in FIG. 5, the main body 27 of each lamp clip 18 of this embodiment and the bottom plate 14a of the chassis 14 have the positioning structures. The main body 27 is positioned with respect to the bottom plate 14a of the chassis 14 in the X-axis direction and the Y-axis direction, that is, relative to the plate surface (the bottom plate 14a of the chassis 14) when the positioning structures are engaged. Specifically, a positioning protrusion 44 protrudes from the rear surface of each main body 27 toward the rear-surface side and the bottom plate 14a of the chassis 14 has positioning holes 45. Each positioning hole 45 is a through hole in which the positioning protrusion 44 is fitted. The positioning protrusion 44 is provided on the main body 27 between the first mounting part 30 and the second mounting part 31 with respect to the Y-axis direction. Specifically, the positioning protrusion 44 is provided directly below the center lamp holding part 28. The size of projection of the positioning protrusion 44 is slightly larger than the thickness of the bottom plate 14a of the chassis 14. The positioning protrusion 44 has a circular shape in plan view (see FIG. 9). Each positioning hole 45 has a circular shape in plan view so as to receive the positioning protrusion 44. The diameter of the positioning hole 45 is defined such that a small clearance is provided when the positioning protrusion 44 is inserted (see FIG. 10). The positioning protrusion 44 and the positioning hole 45 do not match, that is, they are in a non-engaging state (see FIG. 15) when the lamp clip 18 is in the hold position relative to the chassis 14 (i.e., the mounting parts 30 and 31 are in the respective receiving portions 39 and 40). When the lamp clip 18 is in the mounting position relative to the chassis 14 (i.e., the mounting parts 30 and 31 are in the respective mounting holes 32 and 33), the positioning protrusion 44 and the positioning hole 45 are match, that is, they are in an engaging state (see FIG. 7).

Next, the first insertion hole 34 and the second insertion hole 35 in the reflection sheet 23 will be explained. As illustrated in FIG. 5, the first insertion hole 34 is formed such that first mounting hole 32 and the first insertion portion 39 are both within the first insertion hole 34. Namely, the first mounting part 30 can be inserted in the first mounting hole 32 and the first receiving portion 39 through the first insertion hole 34. The second insertion hole 35 is formed such that second mounting hole 33 and the second insertion portion 40 are both within the second insertion hole 35. Namely, the second mounting part 31 can be inserted in the second mounting hole 33 and the second receiving portion 40 through the second insertion hole 35. Furthermore, the reflection sheet 23 has positioning protrusion insertion holes 46 through which the positioning protrusions 44 are inserted. The positioning protrusion insertion holes 46 are formed in locations corresponding to the positioning holes 45.

Next, the functions of this embodiment having the above structures will be explained. Mounting of the lamp clips 18 to the chassis 14 in the manufacturing process of the backlight unit 12 will be explained in detail.

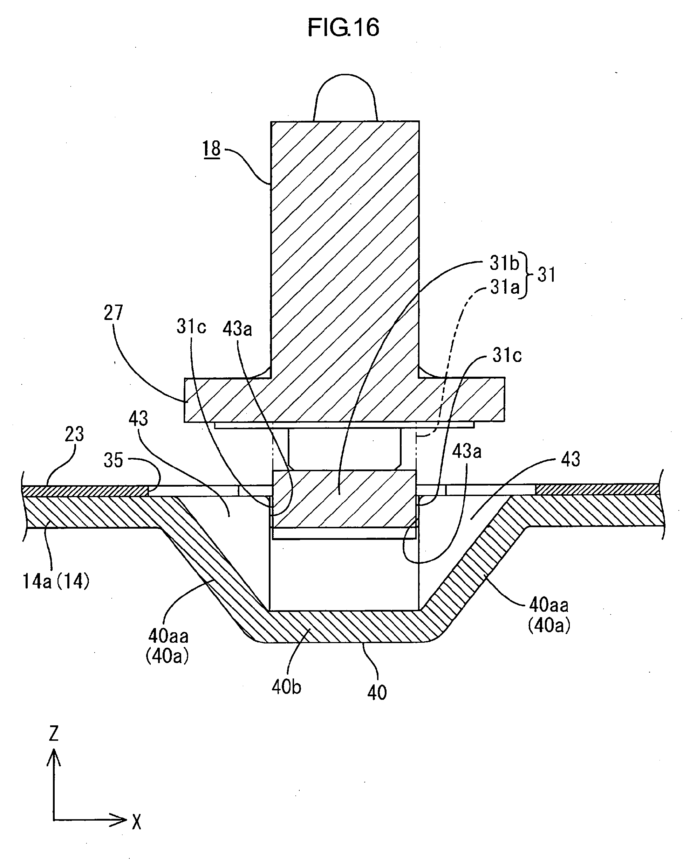

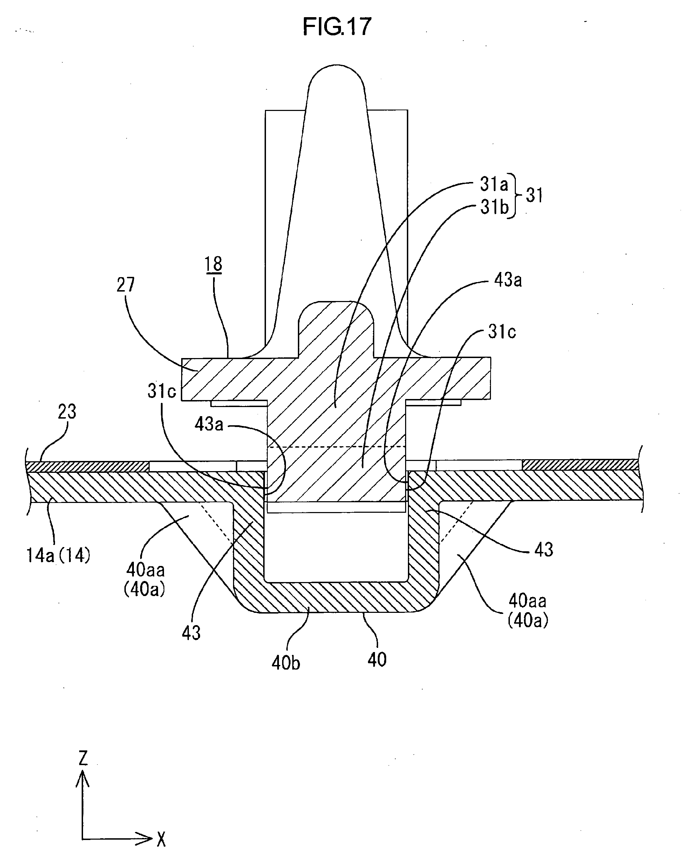

After the reflection sheet 23 is placed in the chassis 14, the lamp clips 18 are mounted to the respective locations of the bottom plate 14a. During mounting, a worker can hold the holding part 29 of each lamp clip 18, which projects farther to the front-surface side. The lamp clip 18 is held in the removed position illustrated in FIG. 13 with the first mounting part 30 and the contact portion 43 positioned above the first insertion portion 39 in plan view and with the second mounting part 31 positioned above the second insertion portion 40. Then, the lamp clip 18 is pushed in the bottom plate 14a of the chassis 14 from the front-surface side along the Z-axis direction. As a result, the first mounting part 30 is inserted in the first receiving portion 39, and the second mounting part 31 is inserted in the second receiving portion 40. The side surfaces 30c and 31c of the mounting parts 30 and 31 are not in contact with the long sidewalls 39aa and 40aa of the sidewalls 39a and 40a of the receiving portions 39 and 40, and predetermined clearances exist therebetween (see FIG. 16). However, they are in surface contact with the contact portions 43 (see FIG. 17).

When the lamp clip 18 is pushed in to the hold position, the positioning protrusion 44 does not match the positioning hole 45 as illustrated in FIG. 14. The positioning protrusion 44 is in contact with the reflection sheet 23 (the bottom plate 14a). Therefore, the main body 27 and the reflection sheet 23 are separated by a distance corresponding to the projecting dimension of the positioning protrusion 44 (i.e., they are at different levels). In this condition, the mounting parts 30 and 31 are partially inserted in the receiving portions 39 and 40. Specifically, a half of each holding portion 30b/31b on the rear-surface side is inserted in the receiving portion 39/40 and in contact with two of the contact portions 43 on the left in FIG. 14. Because the contact portions 43 are formed by hammering with the high dimensional accuracy, they are properly in surface contact with the mounting part 30/31.

In this condition, the gap between the main body 27 and the holding portion 30b/31b of the mounting part 30/31 is not aligned with the edge of the mounting hole 32/33. The holding portion 30b/31b may be aligned with the edge of the mounting hole 32/33 along the Y-axis direction. However, the guide 36 is provided at the distal end of the holding portion 30b/31b of the mounting part 30/31 and a distance between the tip of the guide 36 and the main body 27 is sufficiently large. Therefore, when the lamp clip 18 is slid from the hold position to the mounting position as indicated by an arrow in FIG. 14, that is, along the Y-axis direction, the holding portion 30b/31b is smoothly guided by the guide 36 to the rear-surface side of the edge of the mounting hole 32/33. The holding portion 32/33 elastically deforms so as to open and separate from the main body 27 (to the rear-surface side).

During the movement of the lamp clip 18 from the hold position to the mounting position, the side surface 30c of the first mounting part 30 rubs against the inner surfaces 43a of the contact portions 43 of the first receiving portion 39. Moreover, the side surface 31c of the second mounting part 31 that is away from the first mounting part 30 in the Y-axis direction, that is, the sliding direction rubs against the inner surfaces 43a of the contact portions 43 of the second receiving portion 40. Therefore, the sliding movement of the lamp clip 18 is smoothly guided. Three of the contact portions 43 are arranged parallel to each other in each receiving portion 39/40. They are apart from each other in the Y-axis direction (the sliding direction). A distance between the contact portions 43 that are adjacent to each other with respect to the Y-axis direction is smaller than the length of the mounting part 30/31. Therefore, at least two pairs of the contact portions 43 (the contact portions 43 opposite to each other in the X-axis direction are paired) are always in contact with the mounting parts 30a and 31 during the sliding movement. Furthermore, the contact portions 43 are arranged so as to face each other and sandwich each mounting part 30/31 from the outsides with respect to the X-axis direction (the direction along the main body 27 and perpendicular to the sliding direction). Therefore, the lamp clip 18 is smoothly and evenly slid without a tilt relative to the Y-axis direction.

As illustrated in FIGS. 5 and 7, when the lamp clip 18 is in the mounting position, the holding portions 30b and 31b return to the original shapes with resilience. Moreover, the edge of each mounting hole 32/33 is sandwiched between the holding portion 30b/31b and the main body 27, and the positioning protrusion 44 is fitted in the positioning hole 45. In the mounting position, the edge of the mounting hole 32/33is sandwiched between the main body 27 and the holding portion 30b/31b. Therefore, the lamp clip 18 is less likely to accidentally move in the Z-axis direction. Furthermore, the positioning protrusion 44 is fitted in the positioning hole 45. Therefore, the lamp clip is less likely to accidentally move in the X-axis direction and the Y-axis direction. With these configurations, the lamp clip 18 in the mounting position is stably fixed. In the mounting condition, as illustrated in FIG. 6, parts of the main body 27 overlapping the receiving portions 39 and 40 in plan view are wide portions 42. The wide portions 42 are properly in contact with the bottom plate 14a of the chassis 14 (or the reflection sheet 23). Therefore, the main body 27 is less likely to fall in the receiving portions 39 and 40 and thus the mounting condition is stabilized.

As described above, the backlight unit 12 of this embodiment includes the chassis 14 having the mounting holes 32 and 33, the cold cathode tubes 17 arranged inside the chassis 14, and the lamp clips 18. The lamp clips 18 are mounted to the chassis 14 through the mounting holes 32 and 33 so as to hold the cold cathode tubes 17. Each lamp clip 18 includes the main body 27 arranged inside the chassis 14 and the mounting parts 30 and 31. Each mounting part 30/31 has the base portion 30a/31a and the holding portion 30b/31b. The base portion 30a/31a projects from the main body 27 to the outside of the chassis 14 through the mounting hole 32/33. The holding portion 30b/31b projects from the base portion 30a/31a along the main body 27. The edge of the mounting hole 32/33 is sandwiched between the holding portion 30b/31b and the main body 27. The chassis 14 has the receiving portions 39 and 40, and contact portions 43. Each receiving portion 39/40 formed by drawing a part of the chassis 14 outward. The part is adjacent to the edge of the mounting hole 32/33 on the side away from the edge that is held between the main body 17 and the holding portion 30b/31b of the mounting part 30/31. The receiving portion 39/40 receives the mounting part 30/31. Each contact portion 43 is formed by projecting a part of the sidewall of the receiving portion 39/40 inward and in contact with the mounting part 30/31.

For mounting the lamp clip 18 to the chassis 14, the mounting parts 30 and 31 are inserted in the respective receiving portions 39 and 40. Then, the lamp clip 18 is moved in the extending direction in which the holding portions 30b and 31b extend from the respective base portions 30a and 31a. The base portions 30a and 31a and the holding portions 30b and 31b project from the chassis 14 through the respective mounting holes 32 and 33. The edge of each mounting hole 32/33 is sandwiched between the holding portion 30b/31b and the main body 27. The lamp clip 18 is mounted to the chassis 14. Each receiving portion 39/40 for receiving the mounting part 30/31 is formed by drawing a part of the chassis 14 outward. In comparison to a configuration in which openings that continue into the mounting hole 32 and 33 are provided as receiving portions, the opening area in the chassis 14 can be reduced. Therefore, light is less likely to leak from the chassis 14.

When the mounting parts 30/31 is in the receiving portion 39/40, the contact portions 43 that are formed by projecting parts of the sidewall of the receiving portion 39/40 are in contact with the mounting part 30/31. When the lamp clip 18 is moved from that position in the extending direction in which the holding portion 30b/31b extends, the contact portions 43 rub against the mounting part 30/31. Therefore, the movement of the lamp clip 18 is smoothly guided.

A plurality of the contact portions are arranged along the main body 27 so as to be parallel to each other. During the movement of the lamp clip 18, the mounting part 30/31 rubs against the contact portions 43 for a sufficient period of time. Therefore, high guide performance can be achieved.

The contact portions 43 are arranged such that a distance between the adjacent contact portions 43 is smaller than a dimension of the mounting part 30/31 measuring along the main body 27. At least two contact portions 43 are in contact with the mounting part 30/31 at the same time and thus the lamp clip 18 is less likely to tilt while it is moved. Therefore, high guide performance can be achieved.

The contact portions 43 are arranged on each long sidewall 39aa/40aa of each receiving portions 39/40. The long sidewalls 39aa/40aa are opposed to each other. The either side of the mounting part 30/31 is in contact with the contact parts 43. Therefore, high guide performance can be achieved.

The contact portions 43 are arranged so as to be opposed to each other. The mounting part 30/31 is sandwiched between the contact portions 43. Therefore, high guide performance can be achieved.

The contact portions 43 and each mounting part 30/31 are formed such that contact surfaces thereof (the inner surfaces 43a and the side surfaces 30c) are parallel to each other. Therefore, the contact parts 43 are in surface contact with the mounting part 30/31 and thus high guide performances can be achieved.

The contact portions 43 and each mounting part 30/31 are formed such that the contact surfaces thereof extend straight along the projecting direction in which the base portion 30a/31a projects. When the mounting part 30/31 is inserted in the receiving portion 39/40, the mounting part 30/31 is opposite the contact portions 43. Regardless of the depth of insertion of the mounting part 30/31 in the receiving portion 39/40, the contact portions 43 are in contact with the mounting part 30/31.

The contact portions 43 in each receiving portion 39/40 extend through the receiving portion 39/40 in the projecting direction in which the base portion 30a/31a projects. When the mounting portions 30 and 31 are inserted in the receiving portions 39. and 40, the contact portions 43 are properly in contact with the respective mounting parts 30 and 31. Therefore, the guide function is properly performed.

Each receiving portion 39/40 is formed in a tapered shape that tapers toward the distal end. Each receiving portion 39/40 includes the sidewalls 39a/40a and the bottom wall 39b/40b. The sidewalls 39a/40a rise outward from the chassis 14 and tilt relative to the chassis 14. The bottom wall 39b/40b continues from the distal ends of the sidewalls 39a/40a. The contact portions are provided on the sidewalls 39a/40a. If the clearances are created between the tilting sidewalls 39a/40a and the mounting part 30/31, the contact portions 43 that are formed by projecting parts of the sidewalls 39a/40a inward are in contact with the mounting part 30/31. Therefore, the movement of the lamp clip 18 is preferably guided. Because each receiving portion 39/40 includes the sidewalls 39a/40a that are tilted and has the tapered shape, the mounting part 30/31 is easily inserted therein. Namely, high workability can be provided.

In an area of the chassis 14 adjacent to the sidewalls 39a/40a and the mounting hole 32/33, the slit 41 is formed. The slit 41 continues into the mounting hole 32/33. With this configuration, the tilted sidewalls 39a/40a are easily formed in preferable shapes.

The slit 41 is wider than a dimension defined by the bases of the sidewalls 39a. With this configuration, stress is less likely applied to parts of the chassis 14 around the basses of the sidewalls 39a when the tilted sidewalls 39a are formed by lifting the part of the chassis 14 outward. This reduces defects such as a crack in the chassis 14.

The mounting parts 30 and 31 are provided in a pair at locations away from each other in the extending direction in which the holding portions 30b and 31b extend. The mounting holes 32 and 33 and the receiving portions 39 and 40 are provided in pairs at locations corresponding to the mounting parts 30 and 31. With this configuration, the lamp clip 18 is held to the chassis 14 at two positions away from each other in the projecting direction of the holding portions 30b and 31b. Therefore, the mounting condition is further stabilized and the leak of light is reduced with the receiving portions 39 and 40.

At the distal end of the holding portion 30b/31b of each mounting part 30/31, the guide 36 is provided. The guide 36 is formed such that the distance to the main body 27 gradually increases as the distance to the tip thereof decreases. With the guide 36, the edge of the mounting hole 32/33 smoothly enters the space between the holding portion 30b/31b and the main body 27. The lamp clip 18 is further smoothly moved with the guide 36 together with the contact part 43 during the mounting.

Each main body 27 and the chassis 14 have the positioning structures that define a relative position of the main body 27 to the chassis 14 in a direction along the main body 27 when they are engaged. With these structures, the lamp clip 18 does not move in the direction along the main body 27 and remains in that condition that it is positioned relative to the chassis 14.

The positioning structures are the positioning protrusions 44 on the respective main bodies 27 and the positioning holes 45 formed in the chassis 14 and in which the respective positioning protrusions 44 are fitted. The lamp clips 18 are positioned relative to the chassis 14 when the positioning protrusions 46 on the main bodies 27 are fitted in the positioning holes 45 formed in the chassis 14.

The positioning structures are not engaged when the mounting parts 30 and 31 are in the receiving portions 39 and 40. They are engaged when the mounting parts 30 and 31 are in the mounting holes 32 and 33. When the mounting parts 30 and 31 are in the mounting holes 32 and 33, the edges of the mounting holes 32 and 33 are sandwiched between the main body 27 and the respective holding portions 30b and 31b. Under this condition, the positioning structures are engaged. With this configuration, the lamp clips 18 mounted to the chassis 14 are stably held.

The main body 27 has the wide portions 42 that are wider than the receiving portions 39 and 40 in the areas that overlap the receiving portions 39 and 40 in plan view. With the wide portions 42, the main body 27 is less likely to fall in the receiving portions 39 and 40. Therefore, the mounting condition of the lamp clip 18 is further stabilized. In comparison to a main body having a wide portion in the entire part, the material cost of the main body 27 can be reduced.

### <Second embodiment>

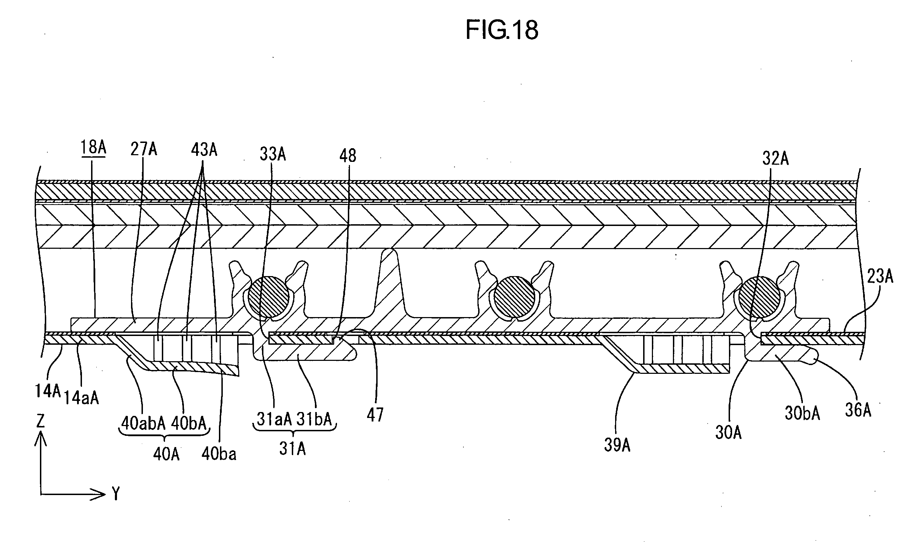

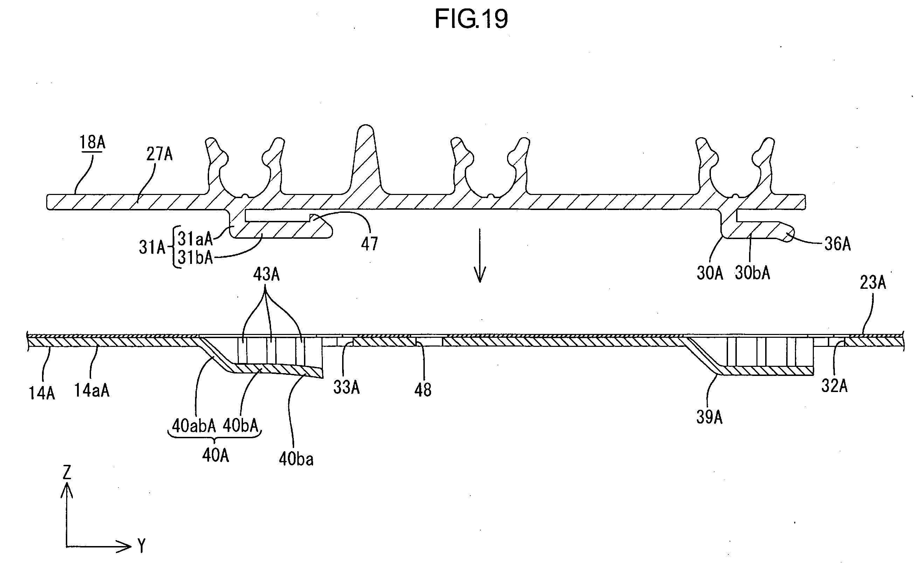

The second embodiment of the present invention will be explained with reference to FIGS. 18 to 20. In this embodiment, the positioning structures are not provided and the configurations of the mounting parts are altered. Similar parts to those in the first embodiment will be indicated by the same symbols followed by letter A. The same structures, functions and effects will not be explained.

At the end of the holding portion 31bA of the second mounting part 31A, a stopper 47 that projects toward the main body 27A is provided. The stopper 47 is fitted in a stopper hole 48 formed in the chassis 14A. A surface of the stopper 47 opposite the main body 27A is a tapered surface. A surface of the stopper 47 opposite the base portion 31aA is upright substantially parallel to the outer surface of the base portion 31aA. The surface is a substantially flat surface along a direction (the Z-axis direction) perpendicular to the sliding direction (the Y-axis direction) of the lamp clip 18A with respect to the chassis 14A. The surface is a mating surface held against edge of the stopper hole 48 of the chassis 14A. The stopper hole 48 is a thorough hole formed in the bottom plate 14a of the chassis 14A on the right of the second mounting hole 33A in FIG. 18, that is, it is formed at a location away from the second mounting hole 33A in the mounting direction. In this embodiment, the positioning structures and the reinforcement ribs of the first embodiment are not provided.

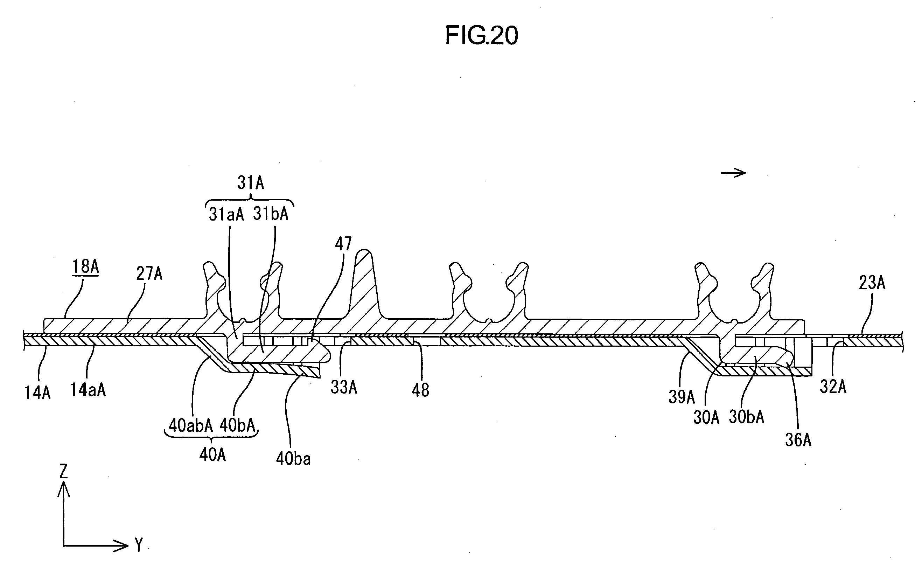

A bottom wall 40bA of the second receiving portion 40A is tilted so as to gradually open outward toward the opening on the second mounting hole 33A side. A part of the bottom wall 40bA of the second receiving portion 40A on the short sidewall 40abA side is substantially flat parallel to the X-Y plane. A part of the bottom wall 40bA on the opening side is a tilted portion 40ba that is tilted such that a distance to the main body 27A increases as a distance to the second mounting hole 33A decreases. In the hold position, a gap is created between the bottom surface of the holding portion 31b of the second mounting part 31A and the inner surface of the bottom wall 40bA. The gap is gradually increased in size toward the distal end of the holding portion 31bA. Therefore, the elastic displacement of the holding portion 31bA, which is in a cantilever shape, of the second mounting part 31A is allowed (see FIG. 20). Furthermore, the contact portions 43 in the second receiving portion 40A extend in a substantially entire Z-axis dimension of the second receiving portion 40A.

During the mounting of the lamp clip 18A to the bottom plate 14aA of the chassis 14A, the first mounting part 30A is positioned relative to the first receiving portion 39A so as to overlap each other in plan view and the second mounting part 31A is positioned relative to the second receiving portion 40A so as to overlap each other in plan view. Then, the lamp clip 18A is brought close to the bottom plate 14aA of the chassis 14A from the front-surface side along the Z-axis direction and pushed in. As a result, the first mounting part 30A is inserted in the first receiving portion 39A and the second mounting part 31A is inserted in the second receiving portion 40A. When the lamp clip 18A is in the hold position, as illustrated in FIG. 20, the rear surface of the main body 27A is in contact with the reflection sheet 23A. The entire part of the first mounting part 30A is inserted in the first receiving portion 39A and the entire part of the second mounting part 31A is inserted in the second receiving portion 40A. The contact portions 43A are in contact with the side surfaces of the mounting parts 30A and 31A. Because the entire parts of the mounting parts 30A and 31A are inserted in the respective receiving portions 39A and 40A, a total contact area is larger than that of the first embodiment. The gap between the main body 27A and the holding portion 30bA/31bA of each mounting part 30A/31A is aligned with the edge of the mounting hole 32A/33A.

Next, the lamp clip 18A is slid from the hold position to the mounting position along the direction indicated by an arrow in FIG. 20, that is, along the Y-axis direction. When the lamp clip 18A reaches a predetermined position, the stopper 47 of the second mounting part 31A goes over the edge of the second mounting hole 33A. The holding portion 31bA elastically deforms so as to separate from the main body 27A and the bottom plate 14aA. Because the bottom wall 40bA of the second receiving portion 40A is tilted, the elastic deformation of the second mounting part 31A is allowed. The guide 36A of the first mounting part 30A rubs against the edge of the first mounting hole 32A and the holding portion 30bA is smoothly guided to the rear of the bottom plate 14aA. Therefore, the edge of the first mounting hole 32A is guided to the gap between the holding portion 30bA and the main body 27A. When the lamp clip 18A is in the mounting position, as illustrate in FIG. 18, the stopper 47 is aligned with the stopper hole 48. The holding portion 31bA of the second mounting part 31A returns to the original shape with resilience. The stopper 47 enters the stopper hole 48 and the mating surfaces fit together. Therefore, the lamp clip 18A is less likely to accidentally move from the mounting position to the hold position (in the removal direction). In the mounting position, the edge of the first mounting hole 32A is sandwiched between the holding portion 30bA of the first mounting part 30A and the main body 27A. Moreover, the edge of the second mounting hole 33A is sandwiched between the holding portion 31bA of the second mounting part 31A and the main body 27A. Therefore, the lamp clip 18A is less likely to accidentally move in the Z-axis direction. With the above configuration, the lamp clip 18A is fixed in the mounting position.

### <Other embodiments>

The present invention is not limited to the above embodiments explained in the above description. The following embodiments may be included in the technical scope of the present invention, for example.

(1) In the above embodiments, three contact parts are arranged in the Y-axis direction so as to be parallel to each other in each receiving portion. However, two or less (including one) or more than three contact parts may be provided. Furthermore, a Y-axis dimension of an area in which the contact parts are arranged can be altered as necessary.

(2) In the above embodiments, the distance between the contact portions that are adjacent to each other in they-axis direction is slightly smaller than the Y-axis dimension of the mounting part. However, the distance between the contact portions may be substantially equal to or larger than the Y-axis dimension of the mounting part.

(3) In the above embodiments, the contact parts are provided on the long sidewalls of each receiving portion. The long sidewalls are opposed to each other. However, the contact parts may be provided on either one of the long sidewalls.

(4) In the above embodiments, the contact parts are provided on the long sidewalls of the sidewalls of each receiving portion along the Y-axis direction. The long sidewalls are opposed to each other. The contact portions are opposed to each other. However, the contact portions on opposite long sidewalls may be partly or entirely displaced from each other in the Y-axis direction.

(5) In the above embodiments, the contact portions are provided on the long sidewalls of the sidewalls of the receiving portion along the Y-axis direction. However, the contact portions may be provided on the bottom wall of the receiving portion.

(6) In the above embodiments, the contact portions and the contact surfaces of the mounting part are parallel to each other. However, the contact portions and the contact surfaces of the mounting part may cross each other. Specifically, the contact portions or the contact surfaces of the mounting portion may be tilted relative to the Z-axis direction, and the ones that are not tilted is parallel to the Z-axis direction.

(7) In the above embodiments, the contact portions and the contact surfaces of the mounting part are parallel to each other and substantially straight along the Z-axis direction. However, they may be tilted relative to the Z-axis direction although they are parallel to each other.

(8) In the above embodiments, each contact portion extends through substantially the entire Z-axis dimension of the receiving portion. However, the contact portion may extend part of the Z-axis dimension of the receiving portion.

(9) In the above embodiments, each lamp clip has two mounting parts. However, the lamp clip may have more than two mounting parts or a single mounting part. In that case, the same number of the receiving portions may be provided. It is preferable that the contact parts are provided in each receiving portion.

(10) In the first embodiment, the positioning holes that extend through the bottom plate of the chassis are provided as the positioning structures. However, the positioning holes may be formed by projecting parts of the bottom plate of the chassis and as the positioning structures. Namely, they are recesses that do not extend through the bottom plate of the chassis.

(11) In the first embodiment, the positioning protrusions are provided on the main bodies and the positioning holes (or the positioning recesses) are provided in the chassis as the positioning structures. However, the positioning holes (or the positioning recesses) may be provided in the main bodies and the positioning protrusions may be provided on the chassis.

(12) In the above embodiments, each lamp clip is slid in the Y-axis direction, that is, the direction perpendicular to the axial direction of the cold cathode tube. However, the lamp clip may be slid in the X-axis direction (the axis direction of the cold cathode tube). The holding portion of each mounting part may extend from the base portion in the X-axis direction.

(13) The relative positions between the mounting parts and the lamp holding parts or the support pin can be altered as necessary. The relative positions between the contact portions or the second contact portions and the lamp holding parts or the support pin may be altered as necessary.

(14) In the above embodiments, each holding portion is formed in a cantilever plate-like shape and elastically deformable. However, the holding portion may be a protrusion that is not elastically deformable.

(15) In the above embodiments, the sidewalls of each receiving portion are tilted. However, the sidewalls may rise substantially upright from the bottom plate of the chassis.

(16) The number and the locations of lamp holding parts can be altered as necessary. The number and the locations of the support pin can be altered as necessary.

(17) In the above embodiments, the cold cathode tubes are used as light sources. However, other kinds of light sources including hot cathode tubes can be used.

(18) In the above embodiments, the chassis is made of metal plates. However, it may be made by resin molding.

(19) In the above embodiments, the TFTs are used as switching components of the liquid crystal display device. However, the technology described the above can be applied to liquid crystal display devices including switching components other than TFTs (e.g., thin film diode (TFD)). Moreover, the technology can be applied to not only color liquid crystal display devices but also black-and-white liquid crystal display devices.

(20) In the above embodiments, the liquid crystal display device including the liquid crystal panel as a display component is used. The technology can be applied to display devices including other types of display components.

(21) In the above embodiments, the television receiver including the tuner is used. However, the technology can be applied to a display device without the tuner.

## Claims

1. A lighting device comprising:
a chassis having a mounting hole;
a lamp arranged inside the chassis; and
a lamp holder mounted to the chassis through the mounting hole and holding the lamp,
wherein the lamp holder includes:
a main body arranged inside the chassis; and
a mounting part including a base portion and a holding portion, the base portion projecting from the main body and extending out of the chassis through the mounting hole, the holding portion projecting from the base portion and extending along the main body such that an edge of the mounting hole is sandwiched between the main body and the holding portion, and
wherein the chassis includes:
a receiving portion for receiving the mounting part, the receiving portion being formed by drawing a part of the chassis outward, the part being adjacent to an edge of the mounting hole opposite to the edge sandwiched between the main body and the holding portion; and
a contact portion formed by projecting a part of the receiving portion inward and configured to be in contact with the mounting part.

2. The lighting device according to claim 1, wherein the contact portion includes a plurality of contact portions arranged in a direction along the main body and parallel to each other.

3. The lighting device according to claim 2, wherein the contact portions are arranged such that a distance between the adjacent contact portions is smaller than a dimension of the mounting part measuring in a direction along the main body.

4. The lighting device according to any one of claims 1 to 3, wherein:
the receiving portion includes opposed walls being opposed to each other; and
the contact portion is provided on each of the opposed walls.

5. The lighting device according to claim 4, wherein the contact portion is opposite another contact portion.

6. The lighting device according to any one of claims 1 to 5, wherein the contact portion and the mounting part are formed such that contact surfaces thereof are parallel to each other.

7. The lighting device according to claim 6, wherein the contact portion and the mounting part are formed such that the contact surfaces are substantially straight along a projecting direction in which the base portion projects.

8. The lighting device according to any one of claims 2 to 7, the contact portion is formed so as to extend through an entire dimension of the receiving portion along a projecting direction in which the base portion projects.

9. The lighting device according to any one of claims 1 to 8, wherein:
the receiving portion is formed in a tapered overall shape tapering toward a distal end, the receiving portion including sidewalls rising outward from the chassis outward and tilting relative to the chassis, and a bottom wall continues from distal ends of the sidewalls; and
the contact portion is provided on at least one of the sidewalls.

10. The lighting device according to claim 9, wherein the chassis has a slit continuing into the mounting hole in an area adjacent to the sidewalls and the mounting hole.

11. The lighting device according to any one of claims 2 to 10, wherein the slit is wider than a dimension defined by bases of the sidewalls.

12. The lighting device according to any one of claims 1 to 11, wherein:
the mounting part includes a pair of mounting parts away from each other in an extending direction in which the holding portion extends;
the mounting hole includes a pair of mounting holes and the receiving portion includes a pair of receiving portions, the mounting holes and the receiving portions being provided in locations corresponding to the respective mounting parts; and
the contact portion is provided in each receiving portion.

13. The lighting device according to any one of claims 1 to 12, wherein the mounting part includes a guide at a distal end of the holding portion, the guide being formed such that a distance to the main body gradually increases as a distance to the distal end decreases.

14. The lighting device according to claim 13, wherein the main body and the chassis further include positioning structures that define a relative position of the main body to the chassis with respect to a direction along the main body.

15. The lighting device according to claim 14, wherein the positioning structures include a positioning protrusion provided on the main body and any one of a positioning recess and a positioning hole formed in the chassis and in which the positioning protrusion is fitted.

16. The lighting device according to any one of claims 14 and 15, wherein the positioning structures are in a non-engaging state in a condition that the mounting part is in the receiving portion and in an engaging state in a condition that the mounting part is in the mounting hole.

17. The lighting device according to any one of claims 1 to 16, wherein the main body has a wide portion that is wider than the receiving portion in an overlapping area that overlaps the receiving portion in plan view.

18. A display device comprising:
the lighting device according to any one of claims 1 to 17; and
a display panel configured to provide display using light from the lighting device.

19. The display device according to claim 18, wherein the display panel is a liquid crystal panel including liquid crystals sealed between a pair of substrates.

20. A television receiver comprising the display device according to any one of claims 18 and 19.
